# EUROPEAN PATENT SPECIFICATION

(11) **EP 3 796 667 B1**
(45) Date of publication and mention of the grant of the patent: **27.12.2023**
(21) Application number: 19896262.3
(22) Date of filing: 09.12.2019
(51) Int. Cl.: H04L 45/00, H04Q 11/00, H04B 10/27, H04J 14/02

(54) **OPTICAL FIBER CUT-OVER METHOD AND APPARATUS, AND SDN CONTROLLER, SYSTEM AND STORAGE MEDIUM**
VERFAHREN UND VORRICHTUNG FÜR CUT-OVER VON GLASFASERN UND SDN-REGLER, SYSTEM UND SPEICHERMEDIUM
PROCÉDÉ ET APPAREIL DE BASCULEMENT DE FIBRE OPTIQUE, DISPOSITIF DE COMMANDE SDN, SYSTÈME ET SUPPORT D'ENREGISTREMENT

(30) Priority: 12.12.2018 CN 201811519838
(43) Date of publication of application: 24.03.2021
(73) Proprietor: ZTE Corporation, Shenzhen, Guangdong 518057 (CN)
(72) Inventor: KE, Zhiyong, Shenzhen, Guangdong 518057 (CN); WU, Shaoyong, Shenzhen, Guangdong 518057 (CN); TIAN, Jian, Shenzhen, Guangdong 518057 (CN)
(74) Representative: Gevers Patents
(86) International application number: PCT/CN2019/123975
(87) International publication number: WO 2020/119625

(56) References cited:
- EP-A2- 2 180 102
- WO-A1-2017/177788
- WO-A1-2018/103460
- CN-A- 101 494 551
- CN-A- 106 374 996
- CN-A- 108 540 215
- US-A1- 2016 050 143
- US-A1- 2018 262 422
- US-B1- 8 018 860
- QIAO C ET AL: "POLYMORPHIC CONTROL FOR COST-EFFECTIVE DESIGN OF OPTICAL NETWORKS", EUROPEAN TRANSACTIONS ON TELECOMMUNICATIONS, WILEY & SONS, CHICHESTER, GB, vol. 11, no. 1, 1 January 2000 (2000-01-01), pages 17-26, XP000949612, ISSN: 1124-318X

## Description

### TECHNICAL FIELD

The present disclosure relates to, but is not limited to, the field of optical network communication technologies, and more particularly, to an optical fiber cut-over method and apparatus, and an SDN controller, a system and a storage medium.

### BACKGROUND

The explosive growth of global data traffic and the rapid development of emerging services represented by video and streaming media services make dynamic high-bandwidth high-quality data services become a main body of network traffic, and drive the network to evolve toward packetization. It can be seen that, the transport network has developed from the traditional synchronous digital hierarchy (SDH) circuit-switching network to the multi-service transfer platform (MSTP, a SDH-based multi-service transfer platform) having a multi-service access function, and gradually evolved to today's optical transport network (OTN) and packet transport network (PTN), which are results of development of network traffic datamation.

At present, during optical fiber maintenance or site addition in the network where an existing network service is running, it is necessary to manually perform traffic switching on operation services one by one, which results in high labor costs and easily causes failure due to manual misoperation, thereby, influencing the existing network service.

US2018262422A1 and US8018860B1 disclosed maintenance methods in optical networks in related art.

US 2016/0050143 A1 provides a transport network control method, a controller, and a node. The method includes: receiving, by a controller, a control request message of a path; determining, according to topology information of a transport network and an atomic behavior that is supported by each node in the transport network, at least one node that the path passes through in the transport network and at least one atomic behavior that the at least one node needs to execute; and sending a path configuration message that includes the atomic behavior to the at least one node correspondingly, so that each node configures a transport plane to execute the atomic behavior included in the message.

### SUMMARY

In order to solve the existing technical problems, embodiments of the present disclosure provide an optical fiber cut-over method, and an SDN controller, a system and a storage medium, which can lower costs and effectively protect service integrity.

The invention is set out in the appended set of claims.

### BRIEF DESCRIPTION OF THE DRAWINGS

Fig. 1 is a schematic diagram of an application scenario of an optical fiber cut-over method provided by an embodiment of the present disclosure.
Fig. 2 is a schematic diagram of an application scenario of an optical fiber cut-over method provided by another embodiment of the present disclosure.
Fig. 3 is a schematic diagram of an application scenario of an optical fiber cut-over method provided by still another embodiment of the present disclosure.
Fig. 4 is a schematic diagram of an application scenario of an optical fiber cut-over method provided by a further embodiment of the present disclosure.
Fig. 5 is a schematic flowchart of an optical fiber cut-over method provided by an embodiment of the present disclosure.
Fig. 6 is a schematic flowchart of an optical fiber cut-over method provided by another embodiment of the present disclosure.
Fig. 7 is a schematic flowchart of an optical fiber cut-over method provided by still another embodiment of the present disclosure.
Fig. 8 is a flowchart of simulated cut-over in an optical fiber cut-over method provided by an embodiment of the present disclosure;
Fig. 9 is a flowchart of executing cut-over in an optical fiber cut-over method provided by an embodiment of the present disclosure.
Fig. 10 is a flowchart of cut-over return in an optical fiber cut-over method provided by an embodiment of the present disclosure.
Fig. 11 is a structural schematic diagram of an optical fiber cut-over apparatus provided by an embodiment of the present disclosure.
Fig. 12 is a structural schematic diagram of an SDN controller provided by an embodiment of the present disclosure.
Fig. 13 is a structural schematic diagram of an optical fiber cut-over system provided by an embodiment of the present disclosure.

### DETAILED DESCRIPTION

The technical solution of the present disclosure will be further described in detail below in conjunction with the drawings and specific embodiments of the specification. Unless otherwise defined, all technical and scientific terms used herein have a same meaning as commonly understood by those ordinarily skilled in the art to which the present disclosure pertains. The terms used in the specification of the present disclosure herein are only for the purpose of describing specific embodiments, and are not intended to limit the present disclosure. The term "and/or" used herein includes any and all combinations of one or more related items listed.

In the following description, the expression "some embodiments" is involved, which describes subsets of all possible embodiments; however, it should be understood that, "some embodiments" may be same subsets or different subsets of all possible embodiments, and can be combined with each other without conflict.

Before further describing the present disclosure in detail, terms and phrases involved in the embodiments of the present disclosure will be described; and the terms and phrases involved in the embodiments of the present disclosure are applicable to the following explanations.

1) A software defined network (SDN) refers to an open network architecture, has main features of centralized controllability and network programmability, and allows a network manager to manage and operate the entire network by software programming. The SDN separates a logic control function from a data forwarding function, so that a software-based network controller implements the logic control function of the network, while an underlying network device only needs to be responsible for implementing the simple data forwarding function; and the SDN interacts with the network controller through an OpenFlow protocol.

2) The OpenFlow protocol refers to an online communication protocol, belongs to a data link layer, and can control a forwarding plane of an online switch or router, thereby changing an online path taken by an online data packet.

In order to solve the problem caused by manually performing traffic switching on operation services one by one, during optical fiber maintenance or site addition in the network where an existing network service is running, an optical fiber cut-over method applied to the SDN network may be provided, so that during optical fiber cut-over or site addition in the network where the existing network service is running, a migration route of an associated service influenced during cut-over of a target optical fiber to be cut over is determined through a topology resource determined according to cut-over information of the target optical fiber, associated service traffic is cut away automatically in advance; after optical fiber maintenance or site addition is completed, the associated service traffic may be switched back again.

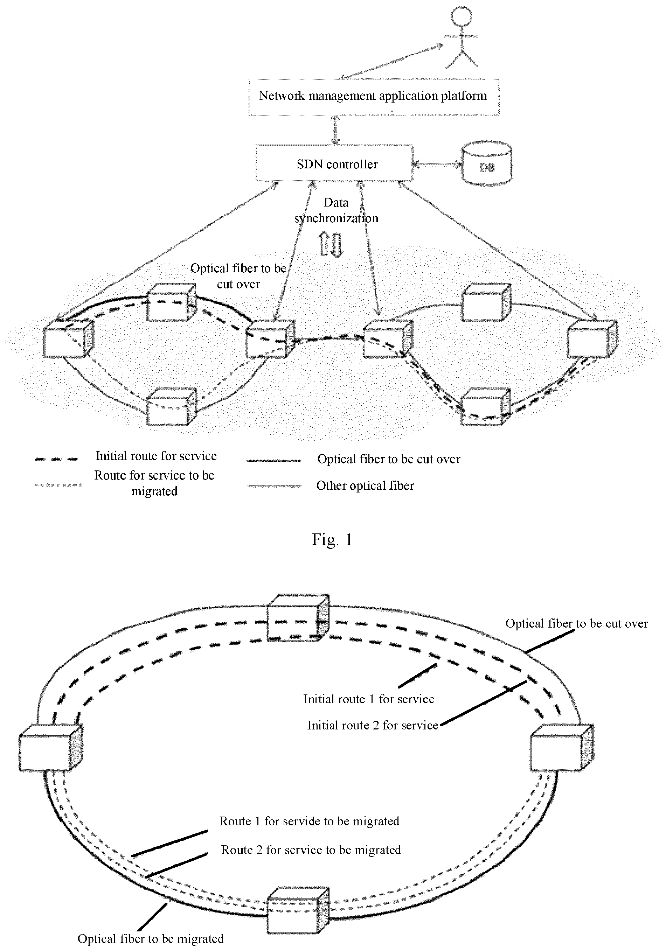

Referring to Fig. 1, Fig. 1 is a schematic diagram of an application scenario in which an optical fiber cut-over method provided by an embodiment of the present disclosure is applied to a single-link single-service architecture, the method is mainly aimed at physical maintenance of a single fiber link, and the optical fiber to be cut over is a single fiber link. Therein, a network management application platform usually includes an application server where a network management application server program is provided and a terminal where a network management application client program is provided. A network manager may send an instruction of network management via the terminal; the instruction is forwarded to an SDN controller via the application server; and the SDN controller responds according to the corresponding instruction and executes steps of the optical fiber cut-over method provided by the embodiment of the present disclosure. Before performing physical maintenance on the optical fiber to be cut over, the optical fiber cut-over method provided by the embodiment of the present disclosure may be used for determining a corresponding migration route; a service carried on a link corresponding to the optical fiber to be cut over needs to be automatically migrated to an expected migration route; and the migration route carries the corresponding service, to ensure service integrity. The optical fiber cut-over method aimed at the single-link single-service architecture is usually suitable for a scenario with rich resources where one service occupies one link at a time, mainly takes into consideration a service that requires high data quality and high real-time performance, and also requires fast response speed after service migration.

Referring to Fig. 2, Fig. 2 is a schematic diagram of an application scenario in which an optical fiber cut-over method provided by another embodiment of the present disclosure is applied to a multi-link single-service architecture, and the method is mainly aimed at physical maintenance of a main-service optical fiber (an optical fiber 1 to be cut over) and a protection-service optical fiber (an optical fiber 2 to be cut over) at a same time. Before performing physical maintenance on the optical fiber to be cut over, the optical fiber cut-over method provided by the embodiment of the present disclosure is used for determining a corresponding migration route; a service carried on a link corresponding to the optical fiber to be cut over needs to be automatically migrated to an expected migration route; and the migration route carries the corresponding service, to ensure service integrity. In the optical fiber cut-over method aimed at the multi-link single-service architecture, since both the main-service optical fiber and the protection-service optical fiber need to be cut over, a protection switching mechanism based on a backup link cannot work.

Optionally, before the service carried on the link corresponding to the optical fiber to be cut over is automatically migrated to the expected migration route, the optical fiber cut-over method may further include executing simulated cut-over to judge whether cut-over can succeed; and based on simulated cut-over, determination of the migration route may be optimized and a cut-over success rate may be improved. Optionally, after the service carried on the link corresponding to the optical fiber to be cut over is automatically migrated to the expected migration route, and optical fiber cut-over is completed, the optical fiber cut-over method may further include executing cut-over return to migrate the corresponding service back to an original route, and thus may effectively protect service integrity. The optical fiber cut-over method aimed at the multi-link single-service architecture is usually suitable for a scenario with rich resources where one service occupies one main link and one protection link at a time, mainly takes into consideration a service that requires high data security, high data quality, and high real-time performance, and also requires fast response speed after service migration.

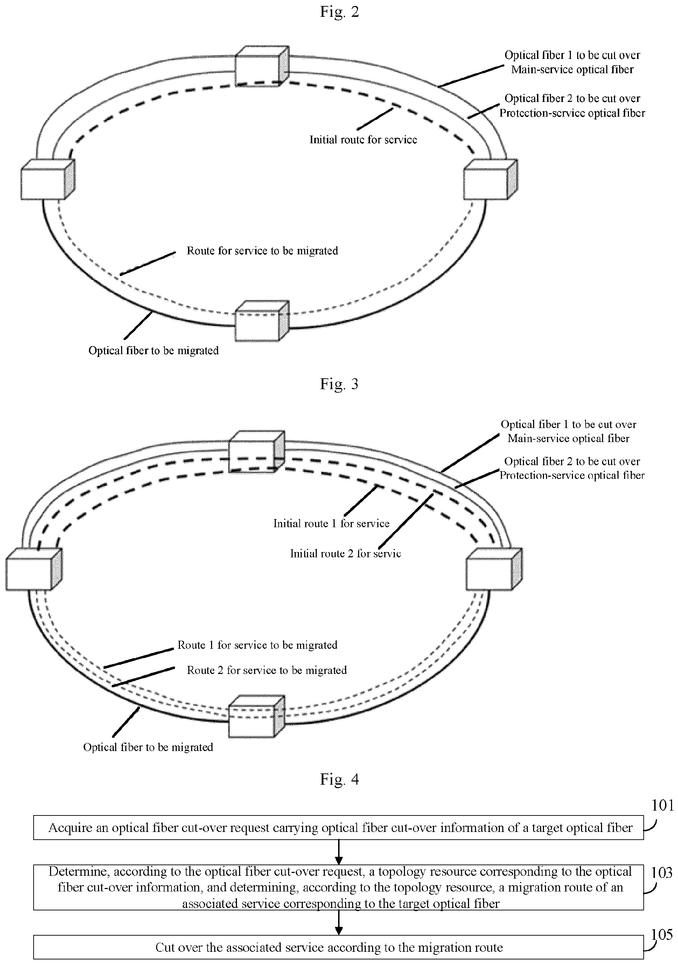

Referring to Fig. 3, Fig. 3 is a schematic diagram of an application scenario in which an optical fiber cut-over method provided by still another embodiment of the present disclosure is applied to a single-link multi-service architecture, and the method is mainly aimed at physical maintenance of a data-intensive target optical fiber on the optical fiber in a case where there may be hundreds or even thousands of services carried on a single link. Before performing physical maintenance on the optical fiber to be cut over, the optical fiber cut-over method provided by the embodiment of the present disclosure is used for determining a corresponding migration route; services carried on a link corresponding to the optical fiber to be cut over need to be automatically migrated to an expected migration route; the migration route carries the corresponding services. The optical fiber cut-over method aimed at the single-link multi-service architecture may further take into consideration processing situations of a large number of normal services, abnormal services (e.g., services in optimization, restoration, and waiting) and migration-failed services; data volume may be stored in a database; and migration of services may be implemented through timer loop traversal.

Optionally, after the services carried on the link corresponding to the optical fiber to be cut over is automatically migrated to the expected migration route, and cut-over of the optical fiber to be cut over is completed, the optical fiber cut-over method may further include executing cut-over return to migrate the corresponding services back to an original route, and thus may effectively protect service integrity. The optical fiber cut-over method aimed at the single-link multi-service architecture is usually suitable for a scenario with a high resource utilization rate, which is also a scenario frequently used at present where multiple services occupy one link; and mainly takes into consideration a scenario that does not require high service security or high real-time performance, and does not require fast response speed after service migration.

Referring to Fig. 4, Fig. 4 is a schematic diagram of an application scenario in which an optical fiber cut-over method provided by yet another embodiment of the present disclosure is applied to a multi-link multi-service architecture, and the method is mainly aimed at physical maintenance of a main-service optical fiber (an optical fiber 1 to be cut over) and a protection-service optical fiber (an optical fiber 2 to be cut over) at a same time. In the optical fiber cut-over method aimed at the multi-link multi-service architecture, since both the main-service optical fiber and the protection-service optical fiber need to be cut over, a protection switching mechanism based on a backup link cannot work; in addition, the optical fiber to be cut over may carry hundreds or even thousands of services, and data is intensive on the optical fiber. Before performing physical maintenance on the optical fiber to be cut over, the optical fiber cut-over method provided by the embodiment of the present disclosure is used for determining a corresponding migration route; a service carried on a link corresponding to the optical fiber to be cut over needs to be automatically migrated to an expected migration route; and the migration route carries the corresponding service. The optical fiber cut-over method aimed at the multi-link multi-service architecture may further take into consideration processing situations of a large number of normal services, abnormal services (e.g., services in optimization, restoration, and waiting) and migration-failed services; data volume may be stored in a database; and migration of services may be implemented through timer loop traversal.

Optionally, after the services carried on the links corresponding to the optical fiber to be cut over are automatically migrated to the expected migration route, the optical fiber cut-over method may further include executing simulated cut-over to judge whether cut-over can succeed; and based on simulated cut-over, determination of the migration route may be optimized and a cut-over success rate may be improved. Optionally, after the services carried on the links corresponding to the optical fiber to be cut over are automatically migrated to the expected migration route, and optical fiber cut-over is completed, the optical fiber cut-over method may further include executing cut-over return to migrate the corresponding services back to an original route, and thus may effectively protect service integrity. The optical fiber cut-over method aimed at the multi-link multi-service architecture is usually suitable for a scenario with a high resource utilization rate, which is also a scenario frequently used at present where multiple services occupy multiple links; and mainly takes into consideration a scenario that requires high service security but does not require high real-time performance or fast response speed after service migration.

Referring to Fig. 5, Fig. 5 shows an optical fiber cut-over method provided by an embodiment of the present disclosure, the method may be applied to an SDN controller, and includes following steps.

Step 101: acquire an optical fiber cut-over request carrying optical fiber cut-over information of a target optical fiber.

Here, the target optical fiber refers to an optical fiber to be maintained; optical fiber maintenance mainly includes cutting over the optical fiber and migrating a service back after the optical fiber is cut over. Taking optical fiber cut-over as an example, the target optical fiber refers to an optical fiber to be cut over. The optical fiber cut-over information refers to related information used to characterize cut-over of a specified optical fiber, and includes optical fiber identification and cut-over start time. The SDN controller acquires an optical fiber cut-over request carrying optical fiber cut-over information of a target optical fiber is that: a network manager sends an optical fiber cut-over instruction carrying the optical fiber cut-over information of the target optical fiber through a network management application on a terminal; a server corresponding to the network management application forwards the optical fiber cut-over instruction to a northbound adapting module of the SDN controller; the SDN controller receives the optical fiber cut-over instruction through the northbound adapting module, parses and converts a data structure into an optical fiber cut-over request of a data format executable by the SDN controller. The data structure of the optical fiber cut-over instruction is usually a JSON-related message issued through REST, and the data format executable by the SDN controller usually refers to a YANG-defined data format.

Step 103: determine a topology resource corresponding to the optical fiber cut-over information according to the optical fiber cut-over request, and determine a migration route of an associated service corresponding to the target optical fiber according to the topology resource.

The topology resource refers to link information contained in an optical network communication system architecture. The associated service refers to a service to be influenced during cut-over of the target optical fiber. The topology resource corresponding to the optical fiber cut-over information refers to link information related to a cut-over operation performed on the target optical fiber in the optical fiber cut-over request, and includes information of a link where the target optical fiber is located and information of a link that can alternatively carry the associated service corresponding to the target optical fiber within start time of cutting over the target optical fiber. The migration route refers to a service path formed by link information for alternatively carrying the associated service corresponding to the target optical fiber within the start time of cutting over the target optical fiber. The SDN controller masters entire network link information of the optical network communication system architecture. The SDN controller, according to a position of the corresponding target optical fiber in the optical fiber cut-over request, determines target nodes in corresponding connection with the target optical fiber and other link connected between the target nodes, so as to determine the migration route of the associated service corresponding to the target optical fiber.

Step 105: cut over the associated service according to the migration route.

The SDN controller performs the cut-over on the associated service according to the migration route refers to that: the SDN controller migrates the influenced associated service to the migration route when cutting over the target optical fiber, so as to automatically complete service cut-over before physical cut-over of the target optical fiber.

In the above-described embodiment of the present disclosure, the optical fiber cut-over request carrying the optical fiber cut-over information of the target optical fiber is acquired, the topology resource corresponding to the optical fiber cut-over information is determined according to the optical fiber cut-over request, the migration route of the associated service corresponding to the target optical fiber is determined according to the topology resource, and the associated service is migrated according to the migration route; in this way, before physical cut-over of the target optical fiber, the route of the associated service corresponding to the target optical fiber can be automatically determined for migration, so that the service influenced by maintenance of the target optical fiber may be automatically cut away and migrated, which, on the one hand, can ensure that the service is not lost during a maintenance process of the target optical fiber and effectively protect service integrity; on the other hand, can greatly reduce labor costs, and avoid failure that may be caused by manual misoperation.

In some embodiments, the step 105 of migrating the associated service according to the migration route includes: when the associated service is a normal service, migrating the normal service to a corresponding migration route; when the associated service is an abnormal service or migration of the normal service fails, re-executing migration for the abnormal service or the migration-failed normal service at a preset time interval, until the number of re-executions of migration reaches a threshold or corresponding migration of the associated service is completed.

Here, the link corresponding to the target optical fiber is a multi-service link, or there may be a plurality of target optical fibers, corresponding to one or more links. When cutting over the target optical fiber, with respect to a scenario containing one to more links and one to more services, the associated service is automatically recognized as a normal service or an abnormal service; with respect to the normal service, it is correspondingly migrated to the expected migration route; with respect to the abnormal service or the cutover-failed normal service, they are collectively regarded as a failed link, for which re-execution of optical fiber cut-over is retried at a time interval preset by a timer. Here, with respect to the abnormal service or the cutover-failed normal service, a threshold is set for the number of retries of re-executing optical fiber cut-over; when the number of retries of re-executing optical fiber cut-over reaches the threshold without resuming normality, a cut-over failure result that optical fiber cut-over of the corresponding service fails is returned to the terminal. With respect to successful migration of a normal service and successful migration of an abnormal service by retrying re-executions of optical fiber cut-over, a cut-over success result of a corresponding service is returned to the terminal

In the above-described embodiment of the present disclosure, whether the associated service is a normal service or an abnormal service may be automatically recognized, and a re-execution strategy may be set for an abnormal service or a migration-failed normal service, so that a migration success probability of the associated service may be improved.

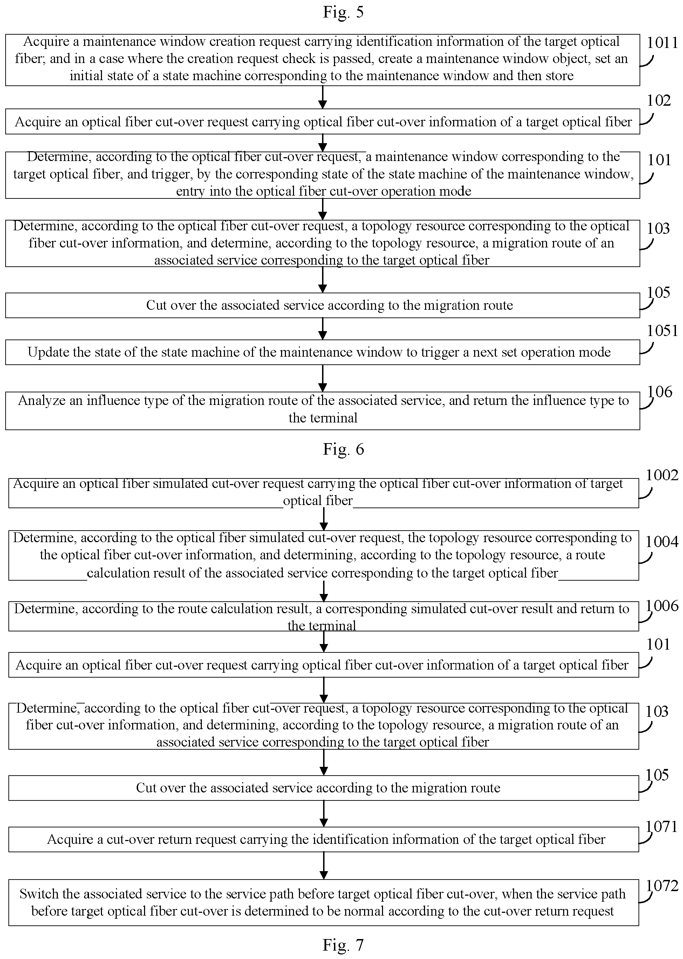

In some embodiments, referring to Fig. 6, after the step 105 of migrating the associated service according to the migration route, the method includes a following step.

Step 106: analyze an influence type of the migration route of the associated service, and returning the influence type to the terminal.

Here, a plurality of influence types are predefined for influence of target optical fiber cut-over on the optical network communication system; after acquiring the influence type, the network manager may quickly determine a processing solution, for example, determine to manually adjust migration of some services according to the influence type. The analyzing, by the SDN controller, an influence type of the migration route of the associated service may be analyzing the associated service to be influenced during target optical fiber cut-over to determine an influence type corresponding to cut-over of the target optical fiber according to the influence type of the migration route corresponding to the associated service; or determining an influence type corresponding to cut-over of the target optical fiber according to a service most influenced in the associated service.

In some embodiments, before the step 101 of acquiring an optical fiber cut-over request carrying optical fiber cut-over information of a target optical fiber, the method includes a following step.

Step 1011: acquire a maintenance window creation request carrying identification information of the target optical fiber; and in a case where a creation request is check and passed, create a maintenance window object, set an initial state of a state machine corresponding to the maintenance window and then store; wherein, the maintenance window includes the optical fiber cut-over information of the target optical fiber, and a state of the state machine is used to trigger a corresponding operation mode.

Here, the maintenance window refers to a data window accordingly created corresponding to one optical fiber maintenance event. The optical fiber cut-over information refers to related information used to characterize cut-over of a specified optical fiber, and includes optical fiber identification and cut-over start time, etc. The identification information of the target optical fiber refers to related information that can uniquely characterize identity of the corresponding target optical fiber, and includes, but not limited to, information such as identification (ID), name, and location, etc., of the target optical fiber. The state of the state machine may be used to respectively characterize triggering of an optical fiber maintenance event corresponding to a corresponding maintenance window, for example, a maintenance window accordingly created for a maintenance event with respect to cut-over of a specified target optical fiber; a state of the state machine of the maintenance window may be used to trigger entry of a cut-over operation mode for cutting over the target optical fiber. It should be noted that, a plurality of stages may be set for a process of cutting over the target optical fiber; the plurality of stages are each regarded as a corresponding operation mode; and a change in the state of the state machine of the maintenance window may be used to identify a current stage of the cut-over process of the target optical fiber, and can be used to trigger entry into a corresponding operation mode of a next stage.

After the SDN controller receives the maintenance window creation request, the method further includes a step of checking the maintenance window creation request; the checking here may include checking an identity of a requester who sends the maintenance window creation request, for example, checking whether the request is sent out by a network manager who has cut-over authority for the target optical fiber; or may also include checking whether information carried in the sent maintenance window creation request meets conditions for creating the maintenance window, for example, whether correct identification information of the target optical fiber is included, whether time information of cutting over the target optical fiber is contained, etc. If checking fails, a response message that checking fails may be returned. The response message that checking fails includes but is not limited to a Remote Procedure Call (RPC) request, which may include a content of the request, a state of the maintenance window, and a cause of error. The acquiring, by the SDN controller, the maintenance window creation request carrying the identification information of the target optical fiber may be that: the network manager sends a maintenance window creation request that the specified target optical fiber needs to be cut over through a network cut-over application on the terminal; the maintenance window creation request needs to carry identification information of the specified target optical fiber and start time corresponding to cut-over of the target optical fiber; the SDN controller creates a maintenance window corresponding to the event of cutting over the target optical fiber according to the identification information of the target optical fiber and the start time corresponding to cut-over of the target optical fiber in the maintenance window creation request, and sets the state of the state machine of the maintenance window to triggering entry of a cut-over operation mode for cutting over the target optical fiber.

In some embodiments, before determining a topology resource corresponding to the optical fiber cut-over information according to the optical fiber cut-over request, the method includes a following step.

Step 102: determine a maintenance window corresponding to the target optical fiber according to the optical fiber cut-over request, and trigger entry into the optical fiber cut-over operation mode by the corresponding state of the state machine of the maintenance window;

After the step 105 of migrating the associated service according to the migration route, the method includes a following step.

Step 1051: update the state of the state machine of the maintenance window to trigger a next set operation mode.

Here, the maintenance window refers to a correspondingly created data window corresponding to an optical fiber maintenance event. The state of the state machine may be used to respectively characterize triggering of the optical fiber maintenance event corresponding to the corresponding maintenance window. By creating the maintenance window, a plurality of stages are set for a process of cutting over the target optical fiber; the plurality of stages are each regarded as a corresponding operation mode; and a change in the state of the state machine of the maintenance window corresponding to the target optical fiber may be used to identify a current stage of the cut-over process of the target optical fiber, and can be used to trigger entry into a corresponding operation mode of a next stage.

In the above-described embodiment of the present disclosure, the maintenance window corresponding to the target optical fiber is created, the state of the state machine of the maintenance window is used to correspondingly trigger entry into the operation mode corresponding to the target optical fiber, the maintenance window corresponding to the cut-over event of the target optical fiber may be created respectively, and progress of the cut-over event of the target optical fiber is recorded and tracked through the state of the state machine of the maintenance window, so that the operation mode of cutting over the target optical fiber may be simplified, and errors in the process of executing cut-over of the target optical fiber may be avoided, so as to ensure efficiency of cutting over the target optical fiber.

In some embodiments, before the step 101 of acquiring an optical fiber cut-over request carrying optical fiber cut-over information of a target optical fiber, the method further includes following steps.

Execute at least one of window maintenance operations below.

Acquire a maintenance window deletion request carrying window identification information, and deleting a corresponding maintenance window when the corresponding maintenance window is found according to the deletion request.

Acquire a maintenance window update request carrying window identification information, and in a case where update request check is determined to be passed, update the corresponding maintenance window according to the update request and then store.

Acquire a maintenance window query request carrying window identification information, and determine a corresponding maintenance window query result according to the query request.

Here, after the maintenance window is created, the method may further include maintenance operations of deleting, updating or querying the maintenance window. With respect to deleting the maintenance window, after receiving the maintenance window deletion request, the SDN controller may determine the corresponding maintenance window according to the window identification information in the request and then delete the corresponding maintenance window. With respect to updating the maintenance window, after receiving the maintenance window update request, the SDN controller may determine the corresponding maintenance window according to the window identification information in the request; if check of update parameters succeeds, replace current maintenance window data in full according to the parameters in the request and import into the database; and if check fails, return a cause of failure as parameter check failure and carry a corresponding error parameter. With respect to maintenance window query, after receiving the maintenance window query request, the SDN controller finds the specified maintenance window according to the window identification information, and returns information of the maintenance window corresponding to the query request.

In some embodiments, referring to Fig. 7, before the step 101 of acquiring an optical fiber cut-over request carrying optical fiber cut-over information of a target optical fiber, the method includes following steps.

Step 1002: acquire an optical fiber simulated cut-over request carrying the optical fiber cut-over information of the target optical fiber;

Step 1004: determine the topology resource corresponding to the optical fiber cut-over information, according to the optical fiber simulated cut-over request, , and determine a route calculation result of the associated service corresponding to the target optical fiber, according to the topology resource,;

Step 1006: determine a corresponding simulated cut-over result and return to the terminal, according to the route calculation result.

Here, the optical fiber simulated cut-over request refers to a request for simulated cut-over of the target optical fiber. Simulated cut-over refers to simulation of cut-over of the target optical fiber to determine a reference for a success rate of cutting over the target optical fiber through simulation, for example, simulated cut-over may be performed on the target optical fiber to prejudge the success rate of cutting over the target optical fiber, or, simulated cut-over may be performed on the target optical fiber to acquire the route calculation result as a reference for parameter update of the maintenance window for executing a cut-over operation on the target optical fiber. Therein, simulated cut-over may be performed before executing cut-over on the target optical fiber, so that simulated cut-over may be taken as one of the states of the state machine of the maintenance window; accordingly, the acquiring, by the SDN controller, an optical fiber simulated cut-over request carrying the optical fiber cut-over information of the target optical fiber, may refer to that the SDN controller, through acquiring the optical fiber simulated cut-over request, determines the corresponding maintenance window based on the optical fiber cut-over information in the optical fiber cut-over request, and enters into a simulated cut-over operation mode as triggered by the state machine of the maintenance window.

In the above-described embodiment of the present disclosure, before cutting over the target optical fiber, simulated cut-over may be firstly performed with respect to optical fiber cut-over, the simulated cut-over result is acquired by performing simulated cut-over on the target optical fiber to prejudge the cut-over success rate of the target optical fiber, or the simulated cut-over result is acquired as a reference basis for manually adjusting part of the migration route in the actual cut-over process, which can optimize the cut-over solution of the target optical fiber.

In some embodiments, the step 1006 of determining a corresponding simulated cut-over result and returning to the terminal according to the route calculation result, includes: in a case where it is determined according to the route calculation result that the associated service can be migrated, returning, to the terminal, a service path after associated service migration as the simulated cut-over result.

Here, since the service path after associated service migration is returned to the terminal as the simulated cut-over result, the network manager may examine a migration route situation of the associated service through the terminal after simulated cut-over is performed on the target optical fiber, so as to conveniently know information situation of the entire link of the optical network communication system after migration of the associated service of the target optical fiber, so that effective monitoring can be implemented.

In some embodiments, the step 1006 of determining a corresponding simulated cut-over result according to the route calculation result and returning to the terminal, further includes: in a case where associated service migration fails, re-executing migration for the migration-failed associated service at a preset time interval, until the number of re-executions of migration reaches a threshold or migration corresponding to the associated service is completed; returning, to the terminal, that the associated service cannot be migrated as the simulated cut-over result, when it is determined according to the route calculation result that the associated service cannot be migrated.

With respect to a case where the target optical fiber carries multiple services, the target optical fiber may carry hundreds or even thousands of services, data is intensive on the target optical fiber; and the associated services may include a large number of normal services and abnormal services, so processing situations of some migration-failed associated services may be further taken into consideration. In consideration of processing situations of the migration-failed associated services, multi-threaded processing may be adopted, to store data volume corresponding to the migration-failed associated services in the database, perform loop traversal through a timer, re-execute migration for the migration-failed associated services at a preset time interval, and set a threshold for the number of re-executions of migration; if the number of re-executions of migration reaches the threshold and migration still fails, accordingly return a simulated cut-over result that migration of the corresponding associated services fails; and if migration succeeds after re-executing migration, accordingly return a simulated cut-over result of the service path after migration of the corresponding associated service succeeds.

On the other hand, with respect to a case where the target optical fiber carries multiple services, the target optical fiber may carry hundreds or even thousands of services, data is intensive on the target optical fiber; the associated services may include a large number of normal services and abnormal services; during simulated cut-over of the target optical fiber, if the migration route is determined to be failed according to the corresponding topology resource, it indicates that the associated services cannot be migrated according to the route calculation result, at this time, that the associated services cannot be migrated is returned to the terminal as a simulated cut-over result, and the network manager, according to the simulated cut-over result of failed migration, may adjust a cut-over strategy for the target optical fiber, for example, adjust start time of cutting over the target optical fiber, or perform manual cut-over on some associated services of the target optical fiber, to optimize the cut-over solution of the target optical fiber.

It should be noted that, in some embodiments, simulated cut-over may be taken as a stage in the process of cutting over the target optical fiber; the stage may be accordingly set as a simulated cut-over operation mode. The states of the state machine in the maintenance window respectively include a first state corresponding to the simulated cut-over operation mode and a second state corresponding to the optical fiber cut-over operation mode. The network manager may send, through the network cut-over application on the terminal, a maintenance window creation request that simulated cut-over needs to be performed on the specified target optical fiber. The SDN controller creates a maintenance window corresponding to the event of cutting over the target optical fiber, according to the identification information of the target optical fiber and the start time corresponding to cut-over of the target optical fiber in the maintenance window creation request; sets the initial state of the state machine of the maintenance window to the first state; and update the state of the state machine to the second state, after the state machine of the maintenance window triggers execution of the simulated cut-over operation mode, so as to facilitate finding the corresponding maintenance window, according to the optical fiber cut-over request that the specified target optical fiber needs to be cut over as sent by the network manager through the network cut-over application on the terminal, and triggering execution of the optical fiber cut-over operation mode by the state of the state machine in the maintenance window .

In some embodiments, after the step 105 of migrating the associated service according to the migration route, the method includes following steps.

Step 1071: acquire a cut-over return request carrying the identification information of the target optical fiber;

Step 1072: switch the associated service to the service path before target optical fiber cut-over, when the service path before target optical fiber cut-over is determined to be normal according to the cut-over return request.

Cut-over return refers to that the associated service migrated during target optical fiber cut-over is returned to the service path before cut-over, after cut-over is completed. The cut-over return request is sent out by the network manager through the network management application on the terminal after determining that physical cut-over of the target optical fiber is completed; or, the cut-over return request may also be automatically sent as triggered by a timer after determining that end time of cut-over of the target optical fiber comes, according to the start time correspondingly set during cut-over of the target optical fiber. The SDN controller acquires the cut-over return request carrying the identification information of the target optical fiber, determines whether the service path before target optical fiber cut-over is normal, for example, may verify, by sending a heartbeat data packet, whether the service path before target optical fiber cut-over is normal. If it is determined to be normal, switch back the associated service to the service path before target optical fiber cut-over. If it is determined to be abnormal, continue to wait for a certain time period to retry; until it may be determined to resume normality, execute a cut-over return operation, or until the number of retries reaches a preset value, send, to the terminal, a cut-over return result that cut-over return fails. In this way, labor costs caused by manually returning the corresponding associated service to the original path after target optical fiber cut-over is completed may also be avoided, and failure that may be caused by manual misoperation is eliminated, which effectively improves efficiency of optical fiber maintenance, and protects service integrity.

It should be noted that, in some embodiments, cut-over return may be taken as a stage in the process of cutting over the target optical fiber; the stage may be accordingly set as a cut-over return operation mode. The states of the state machine in the maintenance window respectively include a first state corresponding to the simulated cut-over operation mode, a second state corresponding to the optical fiber cut-over operation mode, and a third state corresponding to the cut-over return operation mode. The network manager may send, through the network cut-over application on the terminal, a maintenance window creation request that simulated cut-over needs to be performed on the specified target optical fiber. The SDN controller creates a maintenance window corresponding to the event of cutting over the target optical fiber, according to the identification information of the target optical fiber and the start time corresponding to cut-over of the target optical fiber in the maintenance window creation request; sets the initial state of the state machine of the maintenance window to the first state; after the state machine of the maintenance window triggers execution of the simulated cut-over operation mode, updates the state of the state machine to the second state, so as to facilitate finding the corresponding maintenance window, according to the optical fiber cut-over request that the specified target optical fiber needs to be cut over as sent by the network manager through the network cut-over application on the terminal, and triggering, by the state of the state machine in the maintenance window, execution of the optical fiber cut-over operation mode; and after the state machine of the maintenance window triggers execution of the optical fiber cut-over operation mode, updates the state of the state machine to the third state, so as to facilitate finding the corresponding maintenance window, according to the cut-over return request that cut-over return needs to performed on the specified target optical fiber as sent by the network manager through the network cut-over application on the terminal, and triggering, by the state of the state machine in the maintenance window, execution of the cut-over return operation mode.

In some embodiments, after switching the associated service to the service path before target optical fiber cut-over, the method includes: sending, to the terminal, a cut-over return result correspondingly formed by switching the associated service to the service path before target optical fiber cut-over.

Here, the SDN controller switches the associated service corresponding to the target optical fiber to the service path before target optical fiber cut-over according to the cut-over return request; and sends, to the terminal, the cut-over return result correspondingly formed by switching the associated service to the service path before target optical fiber cut-over. The cut-over return result is a cut-over return result that return succeeds, return fails, or return partially fails.

In some embodiments, the sending, to the terminal, a cut-over return result correspondingly formed by switching the associated service to the service path before target optical fiber cut-over, includes: in a case where switching the associated service to the service path before target optical fiber cut-over succeeds, sending, to the terminal, a result that cut-over return succeeds; in a case where switching the associated service to the service path before target optical fiber cut-over fails, repeatedly executing the step of switching the associated service to the service path before target optical fiber cut-over according to a preset period, until the number of repeated executions reaches a preset value, sending, to the terminal, the result that cut-over return of the corresponding associated service fails; or until cut-over return is determined to be successful, sending, to the terminal, the result that cut-over return succeeds.

With respect to a case where the target optical fiber carries multiple services, the target optical fiber may carry hundreds or even thousands of services, data is intensive on the target optical fiber; and the associated services may include a large number of normal services and abnormal services, so processing situations of some return-failed associated services may be further taken into consideration. In consideration of processing situations of the return-failed associated services, multi-threaded processing may be adopted, to store data volume corresponding to the return-failed associated services in the database, perform loop traversal through a timer, re-execute return for the return-failed associated services at a preset time interval, and set a threshold for the number of re-executions of return; if the number of re-executions of return reaches the threshold and return still fails, accordingly return a cut-over return result that return of the corresponding associated service fails; if return succeeds after re-executing return, accordingly return a cut-over return result that return of the corresponding associated service succeeds.

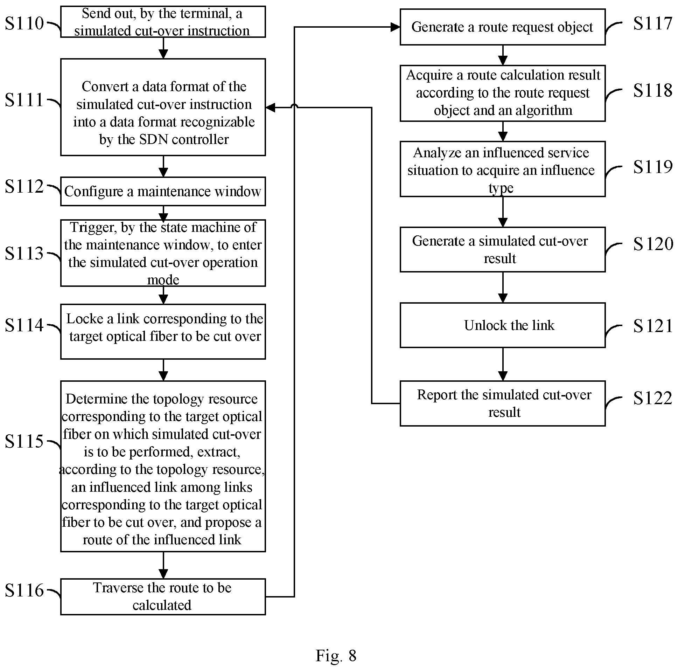

In order to have a more detailed understanding of the implementation process of the optical fiber cut-over method provided by the embodiment of the present disclosure, hereinafter, it is described by respectively taking the simulated cut-over process, the cut-over execution process, and the cut-over return process in the optical fiber cut-over method as examples. It should be noted that, the optical fiber cut-over method may include the simulated cut-over process, the cut-over process, and the cut-over return process. Referring to Fig. 8, Fig. 8 is a schematic diagram of executing a simulated cut-over process in an optical fiber cut-over method provided by an embodiment of the present disclosure; and the simulated cut-over process may include following steps.

Step S110: the terminal sends a simulated cut-over instruction. Herein, the network manager may give out, through the network management application client on the terminal, the instruction of executing simulated cut-over. For example, the terminal may issue, through REST, a JSON-related message for executing simulated cut-over. Here, the terminal may also receive the simulated cut-over result returned by the SDN controller in response to the simulated cut-over instruction.

Step S111: convert a data format of the simulated cut-over instruction into a data format recognizable by the SDN controller. Herein, the SDN controller may convert data through a converting module; the converting module may be a northbound adapting module, which parses a data structure, including but not limited the JSON message, of the simulated cut-over instruction received via the northbound interface, and converts into a data format, including but not limited to a YANG-defined data format, so that simulated cut-over is executed according to the data corresponding to the simulated cut-over instruction. Here, the converting module may also convert the YANG-defined data format of the simulated cut-over result after simulated cut-over is executed into JSON message data to report to the terminal.

Step S112: configure a maintenance window; configure a maintenance mode window corresponding to a target optical fiber to be cut over according to the converted data corresponding to the simulated cut-over instruction, create a window resource, set an initial state machine and perform other operations.

Step S113: trigger, by the state machine of the maintenance window, to enter the simulated cut-over operation mode; start a simulated cut-over thread, enter simulated cut-over, and set the state machine to start a simulate cut-over state.

Step S114: lock a link corresponding to the target optical fiber to be cut over; lock a link of the target optical fiber on which the maintenance mode window is to perform simulated cut-over, to avoid errors in the cut-over process.

Step S115: determine the topology resource corresponding to the target optical fiber on which simulated cut-over is to be performed; extract, according to the topology resource, an influenced link among links corresponding to the target optical fiber to be cut over; and propose a route of the influenced link.

Step S116: traverse the route to be calculated; acquire an influenced service type, etc. by traversing the route to be calculated.

Step S117: generate a route request object; generate a related resource of the route request object.

Step S118: acquire a route calculation result according to the route request object and an algorithm. Herein, the route calculation result may be acquired by applying for an amount of signal according to the route request object and calling various algorithms to perform route calculation.

Step S119: analyze an influenced service situation to acquire an influence type. Herein, the influenced service situation is analyzed to generate the influence type corresponding to the influenced service, according to the influenced service type and other resources of the service acquired in step S116.

Step S 120: generate a simulated cut-over result. That is, construct simulated cut-over result data reported with respect to simulated cut-over, according to the result returned for simulated cut-over and data saved in window maintenance.

Step S121: unlock the link. That is, unlock the simulated cut-over related link configured by the maintenance window.

Step S 122: report the simulated cut-over result. That is, convert, according to the simulated cut-over result generated in step S120, a data format of the result into a data structure format defined by a northbound YANG file, and report to the northbound adapting module of the SDN controller.

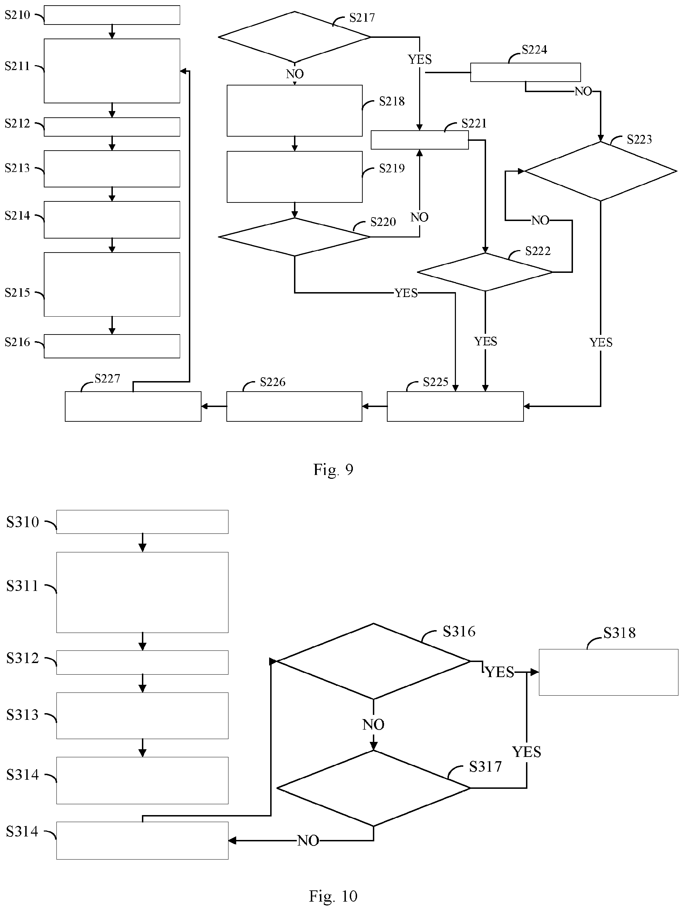

Referring to Fig. 9, Fig. 9 is a schematic diagram of executing a cut-over process in an optical fiber cut-over method provided by an embodiment of the present disclosure, and the cut-over process may include following steps.

Step S210: send out, by the terminal, the optical fiber cut-over instruction. Herein, the network manager may send out the optical fiber cut-over instruction through the network management application client on the terminal. For example, the terminal may issue, through REST, a JSON-related message for executing optical fiber cut-over; here, the terminal may also receive the optical fiber cut-over result returned from the SDN controller in response to the optical fiber cut-over instruction.

Step S211: convert a data format of the optical fiber cut-over instruction into a data format recognizable by the SDN controller. Herein, the SDN controller may convert data through a converting module; the converting module may be a northbound adapting module, which parses a data structure, including but not limited to, the JSON message, of the optical fiber cut-over instruction received via the northbound interface, and converts into a data format, including but not limited to a YANG-defined data format, so that optical fiber cut-over may be executed according to the data of the optical fiber cut-over instruction. Here, the converting module may also convert the data into JSON message data for reporting, the data being with a YANG-defined structure of the optical fiber cut-over result after optical fiber cut-over is executed.

Step S212: configure the maintenance window. That is, configure a maintenance mode window corresponding to the target optical fiber to be cut over according to the data corresponding to the optical fiber cut-over instruction converted, create a window resource, set an initial state machine, and perform other operations.

Step S213: trigger, by the state machine of the maintenance window, to enter the optical fiber cut-over operation mode. That is, start an optical fiber cut-over thread, enter optical fiber cut-over, and set the state machine to start an optical fiber cut-over state.

Step S214: lock a link corresponding to the target optical fiber to be cut over. That is, lock a link corresponding to the optical fiber to be cut over in the maintenance window mode in step S212, to avoid conflicts in the cut-over process.

Step S215: determine the influenced service corresponding to the target optical fiber to be cut over, perform loop traversal for migration. Herein, the influenced service corresponding to the target optical fiber to be cut over is acquired, and loop traversal is performed on the service to execute the cut-over operation.

Step S216: start a failed link timer. Herein, the timer periodically scans an execution-failed data link and an abnormal service data link, so as to retry executions and report results.

Step S217: judge whether the influenced service is an abnormal service. If it is an abnormal service, put into an abnormal service execution-failed link, proceed to step S221, and put in the failed link for traverse execution. If it is a normal service, proceed to step S218.

Step S218: acquire a route set of the influenced service and traverse the route set to execute migration of the influenced service. Herein, according to a link list issued by the maintenance window, a route set corresponding to a currently influenced service is taken out, and the route set is traversed, so as to execute step S219.

It should be noted that, executing migration of the influenced service here is substantially rerouting to implement cutting over the influenced service of the target optical fiber to be cut over, so it is different from protection switching as conventionally understood.

Step S219: determine the migration route according to a preset cut-over principle to migrate the influenced service. Herein, executing optical fiber cut-over refers to migrating the corresponding influenced service by rerouting, allocating a resource for the influenced service, calling algorithms for route calculation, perform cross at a device side, and migrate the service route, before physical cut-over of the target optical fiber to be cut over.

It should be noted that, with respect to protection switching as conventionally understood, it refers to switching between a main link and a backup link; both the main link and the backup link are pre-determined. Switching may be performed only when the main link fails. If both the main link and the backup link are to be cut over, the protection switching function does not work. Here, the determining the migration route by rerouting according to a preset cut-over principle to migrate the influenced service is applicable to cut-over of a main optical fiber and a backup optical fiber at a same time. Secondly, not all nodes in network topology of the optical network communication system have a protection path between them; some nodes do not have a protection path, but still need to have an optical fiber cut over; in this case, protection switching does not work either; here, the determining the migration route by rerouting according to a preset cut-over principle to migrate the influenced service is also applicable to optical fiber cut-over under the single-service single-link architecture without any protection link. Thirdly, protection switching takes time; if the optical fiber is disconnected, the protection switching mechanism still causes loss of some data; here, the determining the migration route by rerouting according to a preset cut-over principle to migrate the influenced service is transporting the service to other route in advance, then maintaining the optical fiber, and migrating the service back when optical fiber cut-over is completed, which may effectively protect service integrity, etc. In addition, the determining the migration route by rerouting according to a preset cut-over principle to migrate the influenced service may be aimed at migration of multiple or even hundreds and thousands of services, which has a wide range of application and high accuracy.

Step S220: judge whether cut-over succeeds. If yes, turn to step S225 to analyze an influenced service situation; otherwise, turn to step S221 of putting in the failed link for traversal execution.

Step S221: put in the failed link for traversal execution. That is, judge, by a timer, whether the abnormal service and the execution-failed normal service have reached waiting time for retry at every certain interval. If reached, re-execute optical fiber cut-over, turning to step S222; otherwise, the timer continues waiting for scanning.

Step S222: judge whether execution of cut-over succeeds. If execution of the service in the failed link succeeds, turn to step S225 of analyzing an influenced service situation; otherwise, turn to step S223 of judging whether the number of retries has been used up.

Step S223: judge whether the number of retries has been used up. If yes, turn to step S226 of analyzing an influenced service situation; otherwise, turn to step S224 of waiting for specified time.

Step S224: wait for specified time. If execution of the service in the failed link fails, and if the number of retries has not been used up, wait for a certain period of time before turning to step S221 of continuing execution.

Step S225: analyze an influenced service situation. That is, construct an influence type result according to the route calculation result and an influence level; acquire influence types of the entire service according to influence types of multiple routes; and taking a type with greatest influence as the influence type of the service.

Step S226: generate a cut-over result for reporting.

Step S227: unlock the link.

Referring to Fig. 10, Fig. 10 is a schematic diagram of a cut-over return process executed in an optical fiber cut-over method provided by an embodiment of the present disclosure, and the cut-over return process may include following steps.

Step S310: send out, by the terminal, a cut-over return instruction. Herein, the network manager may send out the cut-over return instruction through the network management application client on the terminal. For example, the terminal may issue, through REST, a JSON-related message for executing cut-over return. Here, the terminal may also receive the cut-over return result returned from the SDN controller in response to the cut-over return instruction.

Step S311: convert a data format of the cut-over return instruction into a data format recognizable by the SDN controller. Herein, the SDN controller may convert data through a converting module. The converting module may be a northbound adapting module, which parses a data structure, including but not limited to, the JSON message, of the cut-over return instruction received via the northbound interface, and converts into a data format, including but not limited to a YANG-defined data format, so that cut-over return may be executed according to the data of the cut-over return instruction. Here, the converting module may also convert the data with a YANG-defined structure of the cut-over return result after cut-over return is executed into JSON message data for reporting.

Step S312: configure a maintenance window. That is, configure a maintenance mode window corresponding to the target optical fiber to be returned after cut-over, according to the data corresponding to the cut-over return instruction converted, create a window resource, set the initial state machine, and perform other operations.

Step S313: trigger, by the state machine of the maintenance window, to enter the cut-over return operation mode. That is, start a cut-over return thread, enter cut-over return, and set the state machine to start a cut-over return state.

Step S314: generate working and protection routes that need to be returned to. Here, the working and protection routes may be generated according to a window resource and a service topology corresponding to the maintenance window, that is, the service path before target optical fiber cut-over is determined according to the cut-over return request.

It should be noted that, here executing generation of the working and protection routes that need to be returned to is substantially rerouting to implement returning after determining the service path before target optical fiber cut-over according to the cut-over return request, so it is different from protection switching as conventionally understood.

Step S315: execute return according to a route object. Herein, executing return refers to migrating the corresponding influenced service back to the original service path by rerouting, executing service connection manual reply, generating a service-related resource, performing cross, and then notifying a calculation path to release resources, after physical cut-over of target optical fiber to be cut over is completed.

It should be noted that, with respect to protection switching as conventionally understood, it refers to switching between a main link and a backup link; both the main link and the backup link are pre-determined. The service of the backup link can be returned to the main link, only when both the main link and the backup link are normal without alarm. If both the main link and the backup link are to be cut over, the protection switching return function does not work. Here, the executing return according to a route object may be selecting a route to be returned to by route calculation, to ensure that the service can be returned normally. By applying for the topology resource, calling route calculation algorithms to find the route to be restored, and returning the service, even if both the main link and the backup link need to be maintained, cut-over return may be performed normally. Secondly, not all nodes in network topology of the optical network communication system have a protection path between them; some nodes do not have a protection path, but still need to have an optical fiber cut over; in this case, protection switching does not work either; here, the determining the service path before target optical fiber cut-over according to the cut-over return request is also applicable to cut-over return under the single-service single-link architecture without any protection link. Thirdly, protection switching is mainly applicable to an unexpected alarm scenario, and here, cut-over return of migrating the corresponding influenced service back to the original service path by rerouting may be aimed at a known optical fiber maintenance scenario. In addition, the migrating the corresponding influenced service back to the original service path by rerouting may be aimed at migration of multiple or even hundreds and thousands of services, which has a wide range of application and high accuracy.

Step S316: judge whether cut-over return succeeds. If yes, turn to step S318; otherwise, turn to step S317.

Step S317: determine whether the number of retries has been used up. After cut-over return fails, judge whether the number of retries of cut-over return has been used up; if yes, turn to step S318, generate and report the cut-over return result; if not, turn to step S315 of executing return according to the route object, and continue to execute cut-over return.

Step S318: generate and report the cut-over return result. Report a cut-over return execution result to step S311, and finally report to the terminal in step S310.

The optical fiber cut-over method provided by the above-described embodiment of the present disclosure solves the current problems that: i) during conventional optical fiber maintenance, it is necessary to manually detect the influenced service, also necessary to manually migrate traffic for the influenced service, necessary to perform reply-allowable manual optimization on the unprotected service, and also necessary to manually perform switching on the protected service; ii) after optical fiber maintenance is completed, it is necessary to manually return traffic for the original service, necessary to perform manual reply on the unprotected service, and also necessary to perform manual switching on the protected service; and iii) when there is huge traffic, these manual operations become quite cumbersome and time-consuming, and manual operations may cause errors affecting existing network services. By adopting the optical fiber cut-over method provided by the embodiment of the present disclosure, when the target optical fiber needs to be maintained, the route of the associated service corresponding to the target optical fiber can be automatically determined for migration, so that the service influenced by maintenance of the target optical fiber may be automatically cut away, which, on the one hand, ensures that the service will not be lost during maintenance of the target optical fiber and effectively protects service integrity, on the other hand, greatly reduces labor costs and avoids failure that may be caused by manual misoperation. In addition, when the service needs to be returned after physical cut-over of the target optical fiber is completed, the service path before target optical fiber cut-over formed by the working and protection routes that need to be returned to can be automatically determined, and the service is automatically migrated back when the original service path is determined to be normal, which may effectively protect service integrity, and further reduce labor costs.

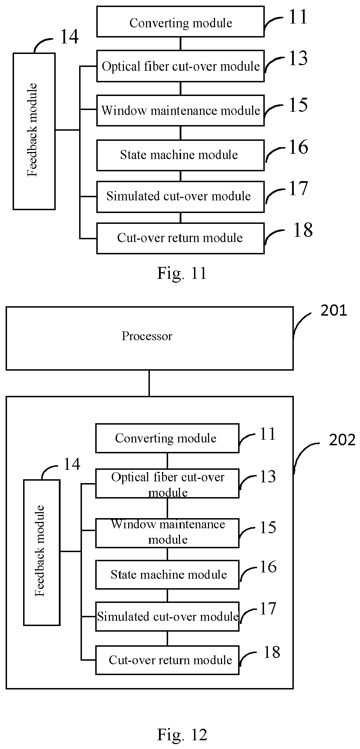

According to another aspect of the embodiments of the present disclosure, it is provided an optical fiber cut-over apparatus; referring to Fig. 11, the optical fiber cut-over apparatus includes: a converting module 11, configured to acquire an optical fiber cut-over request carrying optical fiber cut-over information of a target optical fiber; and an optical fiber cut-over module 13, configured to determine, according to the optical fiber cut-over request, a topology resource corresponding to the optical fiber cut-over information, and determine, according to the topology resource, a migration route of an associated service corresponding to the target optical fiber; and migrate the associated service according to the migration route.

In some embodiments, the optical fiber cut-over module 13 is specifically configured to: in a case where the associated service is a normal service, migrate the normal service to a corresponding migration route; in a case where the associated service is an abnormal service or migration of the normal service fails, re-execute migration for the abnormal service or the migration-failed normal service at a preset time interval, until the number of re-executions of migration reaches a threshold or corresponding migration of the associated service is completed.

In some embodiments, the optical fiber cut-over apparatus further includes a feedback module 14, and the feedback module 14 is configured to: analyze an influence type of the migration route of the associated service after the associated service is migrated according to the migration route, and return the influence type to the terminal.

In some embodiments, the optical fiber cut-over apparatus further includes a window maintenance module 15, the window maintenance module 15 is configured to: acquire a maintenance window creation request carrying identification information of the target optical fiber; and in a case where the creation request check is passed, create a maintenance window object, set an initial state of a state machine corresponding to the maintenance window and then store. Herein, the maintenance window includes the optical fiber cut-over information of the target optical fiber, and a state of the state machine is used to trigger a corresponding operation mode.

In some embodiments, the optical fiber cut-over apparatus further includes a state machine module 16, the state machine module is configured to: determine, according to the optical fiber cut-over request, a maintenance window corresponding to the target optical fiber, and trigger, by a corresponding state of the state machine of the maintenance window, entry into an optical fiber cut-over operation mode; and configured to update the state of the state machine of the maintenance window to trigger a next set operation mode.

In some embodiments, the window maintenance module 15 is further configured to execute at least one of window maintenance operations below: acquire a maintenance window deletion request carrying window identification information, and delete a corresponding maintenance window when the corresponding maintenance window is found according to the deletion request; acquire a maintenance window update request carrying window identification information, and in a case where update request check is determined to be passed, update the corresponding maintenance window according to the update request and then store; acquire a maintenance window query request carrying window identification information, and determine, according to the query request, a corresponding maintenance window query result.

In some embodiments, the optical fiber cut-over apparatus further includes a simulated cut-over module 17; the converting module 11 is further configured to acquire an optical fiber simulated cut-over request carrying the optical fiber cut-over information of the target optical fiber. The simulated cut-over module 17 is configured to: determine, according to the optical fiber simulated cut-over request, a topology resource corresponding to the optical fiber cut-over information, and determine, according to the topology resource, a route calculation result of the associated service corresponding to the target optical fiber; determine, according to the route calculation result, the corresponding simulated cut-over result. The feedback module 14 is further configured to return, to the terminal, the corresponding simulated cut-over result determined according to the route calculation result.

In some embodiments, the feedback module 14 is configured to return, to the terminal, the corresponding simulated cut-over result determined according to the route calculation result, which includes: in a case where it is determined according to the route calculation result that the associated service can be migrated, returning, to the terminal, the service path for associated service migration as the simulated cut-over result.

In some embodiments, the simulated cut-over module 17 is further configured to, in a case where associated service migration fails, re-execute migration for the migration-failed associated service at a preset time interval, until the number of re-executions of migration reaches a threshold or migration corresponding to the associated service is completed. The feedback module is configured to, return, to the terminal, that the associated service cannot be migrated as the simulated cut-over result, when it is determined according to the route calculation result that the associated service cannot be migrated.

In some embodiments, the optical fiber cut-over apparatus further includes a cut-over return module 18; the converting module 11 is further configured to acquire a cut-over return request carrying the identification information of the target optical fiber; and the cut-over return module 18 is configured to switch the associated service to the service path before target optical fiber cut-over, when the service path before target optical fiber cut-over is determined to be normal according to the cut-over return request.

In some embodiments, the feedback module 14 is further configured to send, to the terminal, a cut-over return result correspondingly formed by switching the associated service to the service path before target optical fiber cut-over.

In some embodiments, the feedback module 14 sends, to the terminal, a cut-over return result correspondingly formed by switching the associated service to the service path before target optical fiber cut-over, which specifically includes: in a case where switching the associated service to the service path before target optical fiber cut-over succeeds, sending, to the terminal, a result that cut-over return succeeds; in a case where switching the associated service to the service path before target optical fiber cut-over fails, repeatedly executing the step of switching the associated service to the service path before target optical fiber cut-over according to a preset period; until the number of repeated executions reaches a preset value, sending, to the terminal, the result that cut-over return of the corresponding associated service fails; or until cut-over return is determined to be successful, sending, to the terminal, the result that cut-over return succeeds.

When the optical fiber cut-over apparatus provided by the above-described embodiment performs the optical fiber cut-over process, it is described only by taking division of the above-described respective program modules as an example. In practical application, the above-described steps may be allocated to different program modules as needed, that is, an internal structure of the apparatus may be divided into different program modules, to complete all or part of processing as described above. In addition, the optical fiber cut-over apparatus provided by the above-described embodiment and the optical fiber cut-over method embodiment belong to a same concept, the method embodiment may be referred to for details of the specific implementation process, and no details will be repeated here.

According to another aspect of the embodiments of the present disclosure, it is provided an SDN controller; referring to Fig. 12, the SDN controller may communicate with an application service layer via a northbound interface, and communicate with a data forwarding layer via a southbound interface, to manage a device side such as switches and links in an optical network communication system. The SDN controller includes a processor 201 and a memory 202 configured to store a computer program that can run on the processor 201, wherein, the processor 201 is configured to execute the steps of the optical fiber cut-over method provided by any one of the embodiments of the present disclosure, when running the computer program. Here, the expression "a processor 201 and a memory 202" does not indicate that the corresponding number thereof is one, but may be one or more. The memory 202 stores an operating system and the optical fiber cut-over apparatus configured to implement the optical fiber cut-over method provided by the embodiment of the present disclosure; and the processor 201 is configured to improve calculation and control capabilities and support operation of the entire SDN controller.

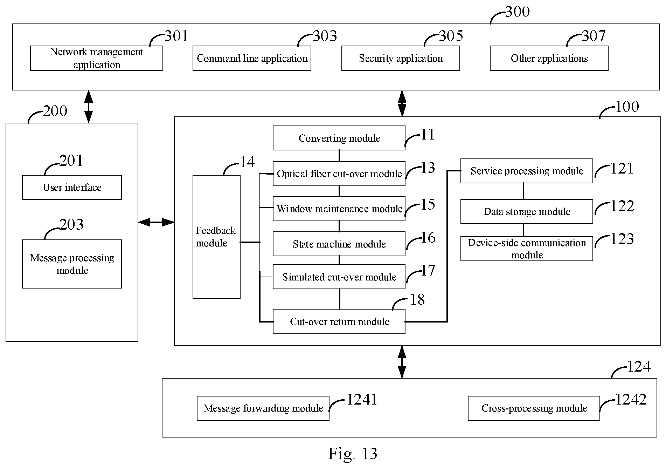

According to yet another aspect of the embodiments of the present disclosure, referring to Fig. 13, it is further provided an optical fiber cut-over system, including an application server 300 and an SDN controller 100, wherein, the SDN controller 100 is configured to execute the optical fiber cut-over method provided by any one of the embodiments of the present disclosure. The application server 300 is configured to receive an instruction sent from the terminal 200, and send the instruction to a northbound interface of the SDN controller 100, and the SDN controller 100 communicates with a device side via a southbound interface. The application server 300 is configured to manage various applications accessed to a network, to send various command operations to a control and management side, for example, the SDN controller 100, and receive a response from the control and management side. The terminal 200 has a client program of the application server 300, for example, a client program of a network management application 301 installed thereon, so that a user may input a corresponding operation instruction through an application interface displayed on a user interface 201 of the terminal 200 and the terminal 200 receives response data corresponding to the operation instruction and displays. For example, the terminal 200 is configured to receive operation instructions such as creation, deletion, update and query input by the user with respect to the maintenance window, or receive operation instructions such as executing simulated cut-over, executing cut-over, and cut-over return input by the user, and receive a response message correspondingly returned by the SDN controller 100 based on the above-described operation instructions that is forwarded by the application server 300, process the response message through a message processing module 203 and then display, for example, display a simulated cut-over result and a cut-over return result, and display link information, etc. of an optical network communication system in a graphical interface provided by UME.

In some embodiments, applications in the application server 300 mainly include a security application 305, the above-described network management application 301, a command line application 303, and a third-party application 307. The security application 305 mainly refers to a security service application accessed to the network, and is configured to establish a security defense mechanism of the network. The network management application is usually accessed by a network manager for network access management and monitoring. The command line application 303 refers to an application accessed by a controller manager, which implements operations such as configuration and query of the controller through a (non-open source) command line reserved by the controller, to implement some verifying and debugging functions, for example, allocating interval time to retrying for failed execution of optical fiber cut-over, etc. The third-party application 307 refers to a conventional application accessed by a third party, and is configured to implement a custom function by calling an open source Application Program Interface (API) of the controller.

The SDN controller 100 is configured to execute the optical fiber cut-over method provided by any one embodiment of the present disclosure, and the optical fiber cut-over apparatus formed by corresponding software program modules may include: a feedback module 14, a converting module 11, a window maintenance module 15, a simulated cut-over module 17, an optical fiber cut-over module 13, a cut-over return module 18 and a state machine module 16. The feedback module 14 is configured to actively report, to the terminal, execution results of window maintenance, simulated cut-over, optical fiber cut-over, and cut-over return that are converted by the converting module; report to the network manager through the user interface of the terminal; and send operation instructions of the network manager to a corresponding module of the optical fiber cut-over apparatus.

The converting module 11 is mainly configured to adapt, via a northbound interface, a message issued by the network manager through a network management application client, for example, a JSON message, into a data format of window maintenance, simulated cut-over, optical fiber cut-over, and cut-over return, for example, a data format defined by a YANG file, etc.; as well as, convert the reported data format of window maintenance, simulated cut-over, optical fiber cut-over, and cut-over return into a data format recognizable by the network management application, for example, convert into the JSON data format for reporting.

The window maintenance module 15 is configured to, but not limited to, perform maintenance window creation, maintenance window deletion, maintenance window modification, and maintenance window query. After creating the maintenance window and setting the state machine, the SDN controller will enter a corresponding operation mode according to a state of the state machine, for example, enter the simulated cut-over module, the optical fiber cut-over module, or the cut-over return module.

The simulated cut-over module 17 is configured to receive a simulated cut-over request, for example, receive a simulated cut-over request of manual window maintenance or automatic window maintenance sent from the network manager through the network management application client on the terminal, find a specified maintenance window by querying the database, and then send the simulated cut-over request to the maintenance module. The maintenance module constructs a route calculation request and performs route calculation according to the simulated cut-over request and a route calculation query condition, judges whether simulated cut-over succeeds or fails according to a route calculation result, and returns the simulated cut-over result to the network management application client on the terminal. If simulated cut-over is allowed under the current state, the state machine generates a next event.

The optical fiber cut-over module 13 is configured to receive a cut-over request, e.g., receive a cut-over request of manual window maintenance or automatic window maintenance sent from the network manager through the network management application client on the terminal, find a specified maintenance window by querying the database; and if found, send the cut-over request to the maintenance module. The maintenance module receives the cut-over request, and if cut-over is not allowed by the current state or other causes, responds with a cut-over failure, showing a reason for failure being that cut-over is not allowed by the current state or other causes, and carrying current state parameters; if cut-over is allowed, sets the state machine to enter the optical fiber cut-over operation mode, and then generates a state machine event to acquire all services on the link of the optical fiber to be cut over. If it is a normal service, directly transports the service to a protection path or a working path. If it is an abnormal service, puts into an abnormal service failed link to repeatedly retry executions. If execution fails, puts into a normal service failed link to execute repeatedly. Meanwhile, the service processing module implements route calculation, allocates resources, and performs cross at a device side to complete the optical fiber cut-over function.

The cut-over return module 18 is configured to receive a cut-over return request, for example, receive a cut-over return request of manual window maintenance or automatic window maintenance (waiting for cut-over return) sent from the network manager through the network management application client on the terminal, find a specified maintenance window by querying the database. If found, send the cut-over return request to the maintenance module; and, judge whether a path before optical fiber cut-over is normal. If normal, set the state of the state machine, enter the state machine to execute cut-over return, and switch the service from a path after optical fiber cut-over to the path before optical fiber cut-over, and issue a command to the device side to execute an optical fiber signal return operation; otherwise, return failure.

The state machine module 16 is configured to migrate a state of the maintenance window, to switch states of respective modules for entire optical fiber cut-over, and enter a corresponding operation mode for execution.

The optical fiber cut-over apparatus further includes a service processing module 121, a data storage module 121, and a device-side communication module 123. The service processing module 121 allocates various resources, calculates routes, and performs cross at the device side. The data storage module 122 stores data to be imported by respective modules into the database, and provides an interface for operations such as adding, deleting, modifying, and querying. The device-side communication module 123 is configured to communicate with a data forwarding layer 124 through various southbound protocols.

The data forwarding layer 124 includes a message forwarding module 1241 and a cross-processing module 1242. The message forwarding module 1241 is configured to communicate with the processor of the SDN controller 100 through various southbound protocols, including but not limited to protocols such as Network Configuration Protocol (netconf), SDN programming language (P4) protocol and openflow protocol. The cross-processing module 1242 is configured to implement optical cross services, including but not limited to, assignment of an end-to-end optical channel service, protection and restoration for optical layer, dynamic bandwidth management, and bandwidth allocation on demand, etc., to implement cut-over and return operations of optical fiber signals through operations of a single board, a chip and related optoelectronic devices on the device side.

According to an embodiment of the present disclosure, it is further provided a computer storage medium, for example, including a memory storing a computer program, wherein, the computer program may be executed by a processor to complete the steps of the optical fiber cut-over method provided by any one embodiment of the present disclosure. The computer storage medium may be a Ferroelectric Random Access Memory (FRAM), a Read-Only Memory (ROM), a Programmable Read-Only Memory (PROM), an Erasable Programmable Read-Only Memory (EPROM), an Electrically Erasable Programmable Read-Only Memory (EEPROM), a Flash Memory, a magnetic surface memory, an optical disk, or a Compact Disc Read-Only Memory (CD-ROM), etc.; or may also be various devices including one or any combination of the above-described memories.

The above are only specific embodiments of the present disclosure, but the scope of the present disclosure is not limited thereto. The embodiments which fall under the scope of the claims are considered embodiments of the invention. Other embodiments are examples useful for understanding the invention.

### Reference signs:

S210: Send out, by the terminal, the optical fiber cut-over instruction
S211: Convert a data format of the optical fiber cut-over instruction into a data format recognizable by the SDN controller
S212: Configure the maintenance window
S213: Trigger, by the state machine of the maintenance window, to enter the optical fiber cut-over operation mode
S214: Lock a link corresponding to the target optical fiber to be cut over
S215: Determine the influenced service corresponding to the target optical fiber to be cut over, perform loop traversal for migration
S216: Start a failed link timer
S217: Judge whether the influenced service is an abnormal service
S218: Acquire a route set of the influenced service and traverse the route set to execute migration of the influenced service
S219: Determine the migration route according to a set cut-over principle to migrate the influenced service
S220: Judge whether cut-over succeeds
S221: Put in the failed link for execution
S222: Judge whether execution of cut-over succeeds
S223: Judge whether the number of retries has been used up
S224: Wait for specified time
S225: Analyze an influenced service situation
S226: Generate a cut-over result for reporting
S227: Unlock the link
S310: Send out, by the terminal, a cut-over return instruction
S311: Convert a data format of the cut-over return instruction into a data format recognizable by the SDN controller
S312: Configure a maintenance window
S313: Trigger, by the state machine of the maintenance window, to enter the cut-over return operation mode
S314: Generate working and protection routes that need to be returned to
S315: Execute return according to a route object
S316: Judge whether cut-over return succeeds
S317: Determine whether the number of retries has been used up
S318: Generate and report the cut-over return result

## Claims

1. An optical fiber cut-over method, comprising:s
acquiring (101) an optical fiber cut-over request carrying optical fiber cut-over information of a target optical fiber;
determining (102), according to the optical fiber cut-over request, a topology resource corresponding to the optical fiber cut-over information; and determining, according to the topology resource, a migration route of associated services corresponding to the target optical fiber; and
migrating (103) the associated services according to the migration route;
**characterized in that**, the migrating (103) the associated services according to the migration route, comprises:
for associated abnormal services, starting a timer and judging, by the timer, whether the abnormal services have reached waiting time for retry at a preset time interval, in response to the associated abnormal services having reached the waiting time for retry, re-executing migrating for the associated abnormal services, until a number of re-executions of migration reaches a threshold or corresponding migration of the associated abnormal services is completed; wherein the abnormal services include services in optimization, restoration or waiting;
for associated normal services,
trying to migrate the normal services to a corresponding migration route;
in response to the migration fails for the normal services, starting a timer and judging, by the timer, whether the services for which migration failed have reached waiting time for retry at a preset time interval, in response to the services for which migration failed having reached the waiting time for retry, re-executing migration for the services for which migration failed, until a number of re-executions of migration reaches a threshold or corresponding migration of the associated services is completed; and
returning to a terminal a cut-over failure result that optical fiber cut-over of the associated services fails, or a cut-over success result of the associated services.

2. The optical fiber cut-over method according to claim 1, wherein, after the migrating (103) the associated services according to the migration route, the method comprises:
analyzing an influence type, and returning the influence type to the terminal, to enable a network manager to determine a cut-over solution according to the influence type; wherein the influence type is predefined for influence of target optical fiber cut-over on an optical network communication system.

3. The optical fiber cut-over method according to claim 1, wherein, before the acquiring (101) the optical fiber cut-over request carrying the optical fiber cut-over information of the target optical fiber, the method comprises:
acquiring (1011) a maintenance window creation request carrying identification information of the target optical fiber; and
in a case where the creation request is checked and passed, creating a maintenance window object, setting an initial state of a state machine corresponding to the maintenance window and then storing the initial state;
wherein, the maintenance window comprises the optical fiber cut-over information of the target optical fiber, and a state of the state machine is used to trigger a corresponding operation mode.

4. The optical fiber cut-over method according to claim 3, wherein, before the determining (103), according to the optical fiber cut-over request, the topology resource corresponding to the optical fiber cut-over information, the method comprises:
determining, according to the optical fiber cut-over request, the maintenance window corresponding to the target optical fiber, and triggering, by a corresponding state of the state machine of the maintenance window, entry into an optical fiber cut-over operation mode;
after the migrating (103) the associated services according to the migration route, the method comprises:
updating (1051) the state of the state machine of the maintenance window to trigger a next set operation mode.

5. The optical fiber cut-over method according to claim 3, wherein, before the acquiring (101) the optical fiber cut-over request carrying optical fiber cut-over information of the target optical fiber, the method further comprises:
executing at least one of window maintenance operations below:
acquiring a maintenance window deletion request carrying window identification information, and deleting a corresponding maintenance window when the corresponding maintenance window is found according to the deletion request;
acquiring a maintenance window update request carrying window identification information; and in a case where update request check is determined to be passed, updating the corresponding maintenance window according to the update request and then storing;
acquiring a maintenance window query request carrying window identification information; and determining, according to the query request, a corresponding maintenance window query result.

6. The optical fiber cut-over method according to claim 1, wherein, before the acquiring (101) the optical fiber cut-over request carrying the optical fiber cut-over information of the target optical fiber, the method comprises:
acquiring an optical fiber simulated cut-over request carrying the optical fiber cut-over information of the target optical fiber;
determining, according to the optical fiber simulated cut-over request, the topology resource corresponding to the optical fiber cut-over information, and determining, according to the topology resource, a route calculation result of the associated services corresponding to the target optical fiber; and
determining, according to the route calculation result, a corresponding simulated cut-over result and returning to the terminal.

7. The optical fiber cut-over method according to claim 6, wherein, the determining, according to the route calculation result, the corresponding simulated cut-over result and returning to the terminal, comprises:
in a case where it is determined according to the route calculation result that the associated services can be migrated, returning, to the terminal, a service path after associated service migration as the simulated cut-over result.

8. The optical fiber cut-over method according to claim 7, wherein, the determining, according to the route calculation result, the corresponding simulated cut-over result and returning to the terminal, further comprises:
for associated abnormal services, in a case where the associated services migration fails, re-executing migration for the services for which migration failed at a preset time interval, until the number of re-executions of migration reaches a threshold or migration corresponding to the associated services is completed;
for associated normal services, in a case where the associated services migration fails, re-executing migration for the services for which migration failed at the preset time interval, until the number of re-executions of migration reaches the threshold or migration corresponding to the associated services is completed;
returning, to the terminal, that the associated services cannot be migrated as the simulated cut-over result, when it is determined according to the route calculation result that the associated services cannot be migrated.

9. The optical fiber cut-over method according to claim 1, wherein, after the migrating (103) the associated services according to the migration route, the method comprises:
acquiring (1071) a cut-over return request carrying the identification information of the target optical fiber; and
switching (1072) the associated services to the service path before target optical fiber cut-over, when the service path before target optical fiber cut-over is determined to be normal according to the cut-over return request.

10. The optical fiber cut-over method according to claim 9, wherein, after the switching (1072) the associated service to the service path before the target optical fiber cut-over, the method comprises:
sending, to the terminal, a cut-over return result correspondingly formed by switching the associated services to the service path before the target optical fiber cut-over.

11. The optical fiber cut-over method according to claim 10, wherein, the sending, to the terminal, the cut-over return result correspondingly formed by switching the associated services to the service path before the target optical fiber cut-over, includes:
in a case where switching the associated services to the service path before the target optical fiber cut-over succeeds, sending, to the terminal, a result that cut-over return succeeds; and
in a case where switching the associated services to the service path before the target optical fiber cut-over fails, repeatedly executing the step of switching the associated services to the service path before the target optical fiber cut-over according to a preset period;
sending, to the terminal, the result that cut-over return of the corresponding associated services fails, until the number of repeated executions reaches a preset value; or
sending, to the terminal, the result that cut-over return succeeds, until cut-over return is determined to be successful.

12. A software defined network controller, called a SDN controller, comprising a processor and a memory configured to store a computer program that can run on the processor; wherein,
the processor is configured to execute the optical fiber cut-over method according to any one of claims 1 to 11, when running the computer program.

13. An optical fiber cut-over system, comprising an application server and the SDN controller according to claim 12, wherein,
the application server is configured to receive an instruction sent from a terminal, and send the instruction to a northbound interface of the SDN controller; and
the SDN controller is configured to communicate with a device side via a southbound interface.

14. A storage medium, wherein, the storage medium has executable instructions stored thereon; and the executable instructions, when executed by a processor, implements the optical fiber cut-over method according to any one of claims 1 to 11 at the SDN controller of claim 12.

## Patentansprüche

1. Glasfaser-Cut-Over-Verfahren, umfassend:
Erfassen (101) einer Glasfaser-Cut-Over-Anfrage, die Glasfaser-Cut-Over-Informationen einer Ziel-Glasfaser überträgt;
Bestimmen (102) gemäß der Glasfaser-Cut-Over-Anfrage einer Topologieressource, die den Glasfaser-Cut-Over-Informationen entspricht; und Bestimmen gemäß der Topologieressource einer Migrationsroute der zugehörigen Dienste, die der Ziel-Glasfaser entsprechen; und
Migrieren (103) der zugehörigen Dienste gemäß der Migrationsroute;
**dadurch gekennzeichnet, dass** das Migrieren (103) der zugehörigen Dienste gemäß der Migrationsroute Folgendes umfasst:
für zugehörige anormale Dienste, Starten eines Timers und Beurteilen durch den Timer, ob die anormalen Dienste die Wartezeit für einen erneuten Versuch in einem voreingestellten Zeitintervall erreicht haben, als Reaktion darauf, dass die zugehörigen anormalen Dienste die Wartezeit für einen erneuten Versuch erreicht haben, erneutes Ausführen der Migration für die zugehörigen anormalen Dienste, bis eine Anzahl von erneuten Migrationsausführungen einen Schwellenwert erreicht hat oder die entsprechende Migration der zugehörigen anormalen Dienste abgeschlossen ist; wobei die anormalen Dienste Dienste zur Optimierung, Wiederherstellung oder zum Warten beinhalten;
für zugehörige normale Dienste,
Versuchen, die normalen Dienste auf eine entsprechende Migrationsroute zu migrieren;
als Reaktion darauf, dass die Migration für die normalen Dienste fehlschlägt, Starten eines Timers und Beurteilen durch den Timer, ob die Dienste, für die die Migration fehlgeschlagen ist, die Wartezeit für einen erneuten Versuch in einem voreingestellten Zeitintervall erreicht haben, als Reaktion darauf, dass die Dienste, für die die Migration fehlgeschlagen ist, die Wartezeit für einen erneuten Versuch erreicht haben, erneute Ausführung der Migration für die Dienste, für die die Migration fehlgeschlagen ist, bis eine Anzahl von erneuten Migrationsausführungen einen Schwellenwert erreicht hat oder die entsprechende Migration der zugehörigen Dienste abgeschlossen ist;
und
Zurückleiten eines Cut-Over-Fehlerergebnisses, dass das Glasfaser-Cut-Over der zugehörigen Dienste fehlschlägt, oder eines erfolgreichen Cut-Over-Ergebnisses der zugehörigen Dienste an ein Endgerät.

2. Glasfaser-Cut-Over-Verfahren nach Anspruch 1, wobei das Verfahren nach dem Migrieren (103) der zugehörigen Dienste gemäß der Migrationsroute Folgendes umfasst:
Analysieren eines Einflusstyps und Zurückleiten des Einflusstyps an das Endgerät, um es einem Netzwerkmanager zu ermöglichen, eine Cut-Over-Lösung gemäß dem Einflusstyp zu bestimmen; wobei der Einflusstyp vordefiniert ist, um den Ziel-Glasfaser-Cut-Over in einem Glasfaser-Netzwerkkommunikationssystem zu beeinflussen.

3. Glasfaser-Cut-Over-Verfahren nach Anspruch 1, wobei das Verfahren vor dem Erfassen (101) der Glasfaser-Cut-Over-Anfrage, die die Glasfaser-Cut-Over-Informationen der Ziel-Glasfaser überträgt, Folgendes umfasst:
Erfassen (1011) einer Anfrage zur Erstellung eines Wartungsfensters, die Identifikationsinformationen der Ziel-Glasfaser überträgt; und
wenn die Erstellungsanfrage geprüft und weitergeleitet wird, Erstellen eines Wartungsfensterobjekts, Festlegen eines Anfangszustands einer Zustandsmaschine dem Wartungsfenster entsprechend und dann Speichern des Anfangszustands;
wobei das Wartungsfenster die Glasfaser-Cut-Over-Informationen der Ziel-Glasfaser umfasst und ein Zustand der Zustandsmaschine verwendet wird, um einen entsprechenden Betriebsmodus auszulösen.

4. Glasfaser-Cut-Over-Verfahren nach Anspruch 3, wobei das Verfahren vor dem Bestimmen (103) gemäß der Glasfaser-Cut-Over-Anfrage derTopologieressource, die den Glasfaser-Cut-Over-Informationen entspricht, Folgendes umfasst:
Bestimmen des Wartungsfensters, das der Ziel-Glasfaser entspricht, gemäß der Glasfaser-Cut-Over-Anfrage und Auslösen des Eintritts in einen Glasfaser-Cut-Over-Betriebsmodus durch einen entsprechenden Zustand der Zustandsmaschine des Wartungsfensters;
wobei das Verfahren nach dem Migrieren (103) der zugehörigen Dienste gemäß der Migrationsroute Folgendes umfasst:
Aktualisieren (1051) des Zustands der Zustandsmaschine des Wartungsfensters, um einen nächsten eingestellten Betriebsmodus auszulösen.

5. Glasfaser-Cut-Over-Verfahren nach Anspruch 3, wobei das Verfahren vor dem Erfassen (101) der Glasfaser-Cut-Over-Anfrage, die Glasfaser-Cut-Over-Informationen überträgt, weiter Folgendes umfasst:
Ausführen mindestens einer der folgenden Fensterwartungsoperationen:
Erfassen einer Wartungsfenster-Löschanfrage, die Fensteridentifikationsinformationen überträgt, und Löschen eines entsprechenden Wartungsfensters, wenn das entsprechende Wartungsfenster gemäß der Löschanfrage gefunden wird;
Erfassen einer Wartungsfensteraktualisierungsanfrage, die Fensteridentifikationsinformationen überträgt; und wenn bestimmt wird, dass die Aktualisierungsanfrageprüfung bestanden ist, Aktualisieren des entsprechenden Wartungsfensters gemäß der Aktualisierungsanfrage und dann Speichern;
Erfassen einer Wartungsfenster-Abfrageanfrage, die Fensteridentifikationsinformationen überträgt; und Bestimmen gemäß der Abfrageanfrage eines entsprechenden Wartungsfenster-Abfrageergebnisses.

6. Glasfaser-Cut-Over-Verfahren nach Anspruch 1, wobei das Verfahren vor dem Erfassen (101) der Glasfaser-Cut-Over-Anfrage, die die Glasfaser-Cut-Over-Informationen der Ziel-Glasfaser überträgt, Folgendes umfasst:
Erfassen einer simulierten Glasfaser-Cut-Over-Anfrage, die die Glasfaser-Cut-Over-Informationen der Ziel-Glasfaser überträgt;
Bestimmen der Topologieressource, die den Glasfaser-Cut-Over-Informationen entspricht, gemäß der simulierten Glasfaser-Cut-Over-Anfrage, und Bestimmen gemäß der Topologieressource eines Routenberechnungsergebnisses der zugehörigen Dienste, die der Ziel-Glasfaser entsprechen; und
Bestimmen gemäß dem Routenberechnungsergebnis eines entsprechenden simulierten Cut-Over-Ergebnisses und Zurückleiten an das Endgerät.

7. Glasfaser-Cut-Over-Verfahren nach Anspruch 6, wobei das Bestimmen des entsprechenden simulierten Cut-Over-Ergebnisses gemäß dem Routenberechnungsergebnis und das Zurückleiten an das Endgerät Folgendes umfasst:
wenn gemäß dem Routenberechnungsergebnis bestimmt wird, dass die zugehörigen Dienste migriert werden können, Zurückleiten eines Dienstpfads nach Migration der zugehörigen Dienste als das simulierte Cut-Over-Ergebnis an das Endgerät.

8. Glasfaser-Cut-Over-Verfahren nach Anspruch 7, wobei das Bestimmen des entsprechenden simulierten Cut-Over-Ergebnisses gemäß dem Routenberechnungsergebnis und das Zurückleiten an das Endgerät weiter Folgendes umfasst:
für zugehörige anormale Dienste, wenn die Migration der zugehörigen Dienste fehlschlägt, erneutes Ausführen der Migration für die Dienste, für die die Migration in einem voreingestellten Zeitintervall fehlgeschlagen ist, bis die Anzahl von erneuten Migrationsausführungen einen Schwellenwert erreicht hat oder eine Migration, die den zugehörigen Diensten entspricht, abgeschlossen ist;
für zugehörige normale Dienste, wenn die Migration zugehöriger Dienste fehlschlägt, erneutes Ausführen der Migration für die Dienste, für die die Migration im voreingestellten Zeitintervall fehlgeschlagen ist, bis die Anzahl von erneuten Migrationsausführungen den Schwellenwert erreicht hat oder die Migration, die den zugehörigen Diensten entspricht, abgeschlossen ist;
Zurückleiten an das Endgerät als das simulierte Cut-Over-Ergebnis, dass die zugehörigen Dienste nicht migriert werden können, wenn gemäß dem Routenberechnungsergebnis bestimmt wird, dass die zugehörigen Dienste nicht migriert werden können.

9. Glasfaser-Cut-Over-Verfahren nach Anspruch 1, wobei das Verfahren nach dem Migrieren (103) der zugehörigen Dienste gemäß der Migrationsroute Folgendes umfasst:
Erfassen (1071) einer Cut-Over-Rückleitungsanfrage, die die Identifikationsinformationen der Ziel-Glasfaser überträgt; und
Umschalten (1072) der zugehörigen Dienste auf den Dienstpfad vor dem Ziel-Glasfaser-Cut-Over, wenn der Dienstpfad vor dem Ziel-Glasfaser-Cut-Over gemäß der Cut-Over-Rückleitungsanfrage als normal bestimmt wird.

10. Glasfaser-Cut-Over-Verfahren nach Anspruch 9, wobei das Verfahren nach dem Umschalten (1072) des zugehörigen Dienstes auf den Dienstpfad vor dem Ziel-Glasfaser-Cut-Over Folgendes umfasst:
Senden an das Endgerät eines Cut-Over-Rückleitungsergebnisses, das entsprechend durch Umschalten der zugehörigen Dienste auf den Dienstpfad vor dem Ziel-Glasfaser-Cut-Over gebildet wurde.

11. Glasfaser-Cut-Over-Verfahren nach Anspruch 10, wobei das Senden des Cut-Over-Rückleitungsergebnisses an das Endgerät, das entsprechend durch Umschalten der zugehörigen Dienste auf den Dienstpfad vor dem Ziel-Glasfaser-Cut-Over gebildet wurde, Folgendes beinhaltet:
wenn Umschalten der zugehörigen Dienste auf den Dienstpfad vor dem erfolgreichen Ziel-Glasfaser-Cut-Over erfolgt, Senden eines Ergebnisses an das Endgerät, dass Cut-Over-Rückleitung erfolgreich ist; und
wenn Umschalten der zugehörigen Dienste auf den Dienstpfad vor dem Ziel-Glasfaser-Cut-Over fehlschlägt, wiederholtes Ausführen des Schritts des Umschaltens der zugehörigen Dienste auf den Dienstpfad vor dem Ziel-Glasfaser-Cut-Over gemäß einem voreingestellten Zeitraum;
Senden des Ergebnisses, dass die Cut-Over-Rückleitung der entsprechenden zugehörigen Dienste fehlschlägt, an das Endgerät, bis die Anzahl von erneuten Ausführungen einen voreingestellten Wert erreicht; oder
Senden des Ergebnisses, dass die Cut-Over-Rückleitung erfolgreich ist, an das Endgerät, bis bestimmt wird, dass die Cut-Over-Rückleitung erfolgreich war.

12. Softwaredefinierter Netzwerkcontroller, sogenannter SDN-Controller, der einen Prozessor und einen Speicher umfasst, der zum Speichern eines Computerprogramms konfiguriert ist, das auf dem Prozessor laufen kann; wobei
der Prozessor konfiguriert ist, das Glasfaser-Cut-Over-Verfahren nach einem der Ansprüche 1 bis 11 auszuführen, wenn das Computerprogramm läuft.

13. Glasfaser-Cut-Over-System, das einen Anwendungsserver und den SDN-Controller nach Anspruch 12 umfasst, wobei:
der Anwendungsserver konfiguriert ist, eine von einem Endgerät gesendete Anweisung zu empfangen und die Anweisung an eine Northbound-Schnittstelle des SDN-Controllers zu senden; und
der SDN-Controller konfiguriert ist, über eine Southbound-Schnittstelle mit einer Vorrichtung zu kommunizieren.

14. Speichermedium, wobei auf dem Speichermedium ausführbare Anweisungen gespeichert sind; und die ausführbaren Anweisungen, wenn sie von einem Prozessor ausgeführt werden, das Glasfaser-Cut-Over-Verfahren nach einem der Ansprüche 1 bis 11 am SDN-Controller nach Anspruch 12 implementieren.

## Revendications

1. Procédé de basculement de fibre optique, comprenant :
l'acquisition (101) d'une demande de basculement de fibre optique transmettent des informations de basculement de fibre optique d'une fibre optique cible ;
la détermination (102), en fonction de la demande de basculement de fibre optique, d'une ressource de topologie correspondant aux informations de basculement de fibre optique ; et la détermination, en fonction de la ressource de topologie, d'un itinéraire de migration de services associés correspondant à la fibre optique cible ; et
la migration (103) des services associés en fonction de l'itinéraire de migration ;
**caractérisé en ce que** la migration (103) des services associés en fonction de l'itinéraire de migration comprend :
pour des services anormaux associés, la mise en marche d'un temporisateur et l'évaluation, au moyen du temporisateur, si les services anormaux ont atteint un temps d'attente pour une nouvelle tentative à un intervalle de temps prédéfini, en réponse aux services anormaux associés ayant atteint le temps d'attente pour une nouvelle tentative, la réexécution d'une migration pour les services anormaux associés, jusqu'à ce qu'un certain nombre de réexécutions de migration atteigne un seuil ou jusqu'à ce qu'une migration correspondante des services anormaux associés soit terminée ; dans lequel les services anormaux incluent des services en optimisation, restauration ou attente ;
pour des services normaux associés,
la tentative de faire migrer les services normaux vers un itinéraire de migration correspondant ;
en réponse à l'échec de la migration pour les services normaux, la mise en marche d'un temporisateur et l'évaluation, au moyen du temporisateur, si les services pour lesquels une migration a échoué, ont atteint un temps d'attente pour une nouvelle tentative à un intervalle de temps prédéfini, en réponse aux services pour lesquels une migration a échoué ayant atteint le temps d'attente pour une nouvelle tentative, la réexécution d'une migration pour les services pour lesquels une migration a échoué, jusqu'à ce qu'un certain nombre de réexécutions de migration atteigne un seuil ou jusqu'à ce qu'une migration correspondante des services associés soit terminée ;
et
le renvoi à un terminal d'un résultat d'échec de basculement indiquant qu'un basculement de fibre optique des services associés échoue, ou d'un résultat de réussite de basculement des services associés.

2. Procédé de basculement de fibre optique selon la revendication 1, dans lequel, après la migration (103) des services associés en fonction de l'itinéraire de migration, le procédé comprend :
l'analyse d'un type d'influence et le renvoi du type d'influence au terminal pour permettre à un gestionnaire de réseau de déterminer une solution de basculement en fonction du type d'influence ; dans lequel le type d'influence est prédéfini pour une influence de basculement de fibre optique cible sur un système de communication par réseau optique.

3. Procédé de basculement de fibre optique selon la revendication 1, dans lequel, avant l'acquisition (101) de la demande de basculement de fibre optique transmettant les informations de basculement de fibre optique de la fibre optique cible, le procédé comprend :
l'acquisition (1011) d'une demande de création de fenêtre de maintenance transmettant des informations d'identification de la fibre optique cible ; et
dans le cas où la demande de création est vérifiée et acceptée, la création d'un objet de fenêtre de maintenance, la définition d'un état initial d'une machine à états correspondant à la fenêtre de maintenance et, ensuite, le stockage de l'état initial ;
dans lequel la fenêtre de maintenance comprend les informations de basculement de fibre optique de la fibre optique cible et un état de la machine à états est utilisé pour déclencher un mode de fonctionnement correspondant.

4. Procédé de basculement de fibre optique selon la revendication 3, dans lequel, avant la détermination (103), en fonction de la demande de basculement de fibre optique, de la ressource de topologie correspondant aux informations de basculement de fibre optique, le procédé comprend :
la détermination, en fonction de la demande de basculement de fibre optique, de la fenêtre de maintenance correspondant à la fibre optique cible et le déclenchement, par un état correspondant de la machine à états de la fenêtre de maintenance, d'une entrée dans un mode de fonctionnement de basculement de fibre optique ;
après la migration (103) des services associés en fonction de l'itinéraire de migration, le procédé comprend :
la mise à jour (1051) de l'état de la machine à états de la fenêtre de maintenance pour déclencher un prochain mode de fonctionnement défini.

5. Procédé de basculement de fibre optique selon la revendication 3, dans lequel, avant l'acquisition (101) de la demande de basculement de fibre optique transmettant des informations de basculement de fibre optique de la fibre optique cible, le procédé comprend en outre :
l'exécution d'au moins une des opérations de maintenance de fenêtre ci-dessous :
l'acquisition d'une demande de suppression de fenêtre de maintenance transmettant des informations d'identification de fenêtre et la suppression d'une fenêtre de maintenance correspondante lorsque la fenêtre de maintenance correspondante est trouvée en fonction de la demande de suppression ;
l'acquisition d'une demande de mise à jour de fenêtre de maintenance transmettant des informations d'identification de fenêtre ; et dans le cas où il est déterminé qu'une vérification de demande de mise à jour a été réussie, la mise à jour de la fenêtre de maintenance correspondante en fonction de la demande de mise à jour et, ensuite, le stockage ;
l'acquisition d'une demande d'interrogation de fenêtre de maintenance transmettant des informations d'identification de fenêtre ; et la détermination, en fonction de la demande d'interrogation, d'un résultat d'interrogation de fenêtre de maintenance correspondant.

6. Procédé de basculement de fibre optique selon la revendication 1, dans lequel, avant l'acquisition (101) de la demande de basculement de fibre optique transmettant les informations de basculement de fibre optique de la fibre optique cible, le procédé comprend :
l'acquisition d'une demande de basculement simulé de fibre optique transmettant les informations de basculement de fibre optique de la fibre optique cible ;
la détermination, en fonction de la demande de basculement simulé de fibre optique, de la ressource de topologie correspondant aux informations de basculement de fibre optique et la détermination, en fonction de la ressource de topologie, d'un résultat de calcul d'itinéraire des services associés correspondant à la fibre optique cible ; et
la détermination, en fonction du résultat de calcul d'itinéraire, d'un résultat de basculement simulé correspondant et le renvoi au terminal.

7. Procédé de basculement de fibre optique selon la revendication 6, dans lequel la détermination, en fonction du résultat de calcul d'itinéraire, du résultat de basculement simulé correspondant et le renvoi au terminal, comprennent :
dans le cas où il est déterminé, en fonction du résultat de calcul d'itinéraire, que les services associés peuvent être migrés, le renvoi, au terminal, d'un itinéraire de service après la migration de service associés en tant que résultat de basculement simulé.

8. Procédé de basculement de fibre optique selon la revendication 7, dans lequel la détermination, en fonction du résultat de calcul d'itinéraire, du résultat de basculement simulé correspondant et le renvoi au terminal comprennent en outre :
pour des services anormaux associés, dans un cas où la migration de services associés échoue, la réexécution d'une migration pour les services pour lesquels la migration a échoué à un intervalle de temps prédéfini, jusqu'à ce que le nombre de réexécutions de migration atteigne un seuil ou jusqu'à ce qu'une migration correspondant aux services soit terminée ;
pour des services normaux associés, dans un cas où la migration de services associés échoue, la réexécution d'une migration pour les services pour lesquels la migration a échoué à l'intervalle de temps prédéfini, jusqu'à ce que le nombre de réexécutions de migration atteigne le seuil ou jusqu'à ce qu'une migration correspondant aux services soit terminée ;
le renvoi au terminal que les services associés ne peuvent pas être migrés en tant que résultat de basculement simulé, lorsqu'il est déterminé en fonction du résultat de calcul d'itinéraire que les services associés ne peuvent pas être migrés.

9. Procédé de basculement de fibre optique selon la revendication 1, dans lequel, après la migration (103) des services associés en fonction de l'itinéraire de migration, le procédé comprend :
l'acquisition (1071) d'une demande de renvoi de basculement transmettant les informations d'identification de la fibre optique cible ; et
la commutation (1072) des services associés vers le trajet de service avant le basculement de la fibre optique cible, lorsque le trajet de service avant le basculement de la fibre optique cible est déterminé comme étant normal en fonction de la demande de renvoi de basculement.

10. Procédé de basculement de fibre optique selon la revendication 9, dans lequel, après la commutation (1072) du service associé vers le trajet de service avant le basculement de fibre optique cible, le procédé comprend :
l'envoi, au terminal, d'un résultat de renvoi de basculement formé de manière correspondante en commutant les services associés vers le trajet de service avant le basculement de fibre optique cible.

11. Procédé de basculement de fibre optique selon la revendication 10, dans lequel l'envoi, au terminal, du résultat de renvoi de basculement formé de manière correspondante en commutant les services associés vers le trajet de service avant le basculement de fibre optique cible, inclut :
dans le cas où une commutation des services associés vers le trajet de service avant que le basculement de fibre optique cible ne réussisse, l'envoi, au terminal, d'un résultat indiquant que le renvoi de basculement a réussi ; et
dans le cas où une commutation des services associés vers le trajet de service avant que le basculement de fibre optique cible n'échoue, l'exécution répétée de l'étape de commutation des services associés vers le trajet de service avant le basculement de fibre optique cible en fonction d'une période prédéfinie ;
l'envoi, au terminal, du résultat qu'un renvoi de basculement des services associés correspondants a échoué, jusqu'à ce que le nombre d'exécutions répétées atteigne une valeur prédéfinie ; ou
l'envoi, au terminal, du résultat que le renvoi de basculement a réussi, jusqu'à ce qu'il soit déterminé que le renvoi de basculement est réussi.

12. Dispositif de commande de réseau défini par logiciel, appelé dispositif de commande SDN, comprenant un processeur et une mémoire configurée pour stocker un programme informatique pouvant s'exécuter sur le processeur ; dans lequel
le processeur est configuré pour exécuter le procédé de basculement de fibre optique selon l'une quelconque des revendications 1 à 11, lors d'une exécution du programme informatique.

13. Système de basculement de fibre optique, comprenant un serveur d'applications et le dispositif de commande SDN selon la revendication 12, dans lequel
le serveur d'applications est configuré pour recevoir une instruction envoyée depuis un terminal, et envoyer l'instruction à une interface nord du dispositif de commande SDN ; et
le dispositif de commande SDN est configuré pour communiquer avec un côté dispositif par le biais d'une interface sud.

14. Support de stockage, dans lequel le support de stockage présente des instructions exécutables stockées sur celui-ci ; et les instructions exécutables, lorsqu'elles sont exécutées par un processeur, mettent en oeuvre le procédé de basculement de fibre optique selon l'une quelconque des revendications 1 à 11 au niveau du dispositif de commande SDN de la revendication 12.
